# EUROPEAN PATENT APPLICATION

(11) **EP 4 818 227 A1**
(43) Date of publication of application: **07.10.2026**
(21) Application number: 24898131.8
(22) Date of filing: 27.11.2024
(51) Int. Cl.: C08G 64/02, C08G 64/42, C08G 64/18, C08L 69/00, B32B 27/36

(54) **NOVEL POLYCARBONATE-BASED POLYMER CAPABLE OF CONTROLLING BIODEGRADATION RATE BY VARIOUS METHODS INCLUDING BIODEGRADATION OFF-ON, AND APPLICATION THEREOF**

(30) Priority: 27.11.2023 KR 20230167016
(71) Applicant: Innopoiesis Co. Ltd., Seoul 02841 (KR)
(72) Inventor: LEE, Kyu Back, Seoul 02831 (KR); WOO, Han Young, Seoul 06360 (KR); JEONG, Sang Yeong, Seoul 02632 (KR)
(74) Representative: Kraus & Lederer PartGmbB
(86) International application number: PCT/KR2024/019024
(87) International publication number: WO 2025/116537

(57) **Abstract**

The present disclosure relates to a novel polycarbonate-based polymer capable of controlling the biodegradation rate by various methods including biodegradation OFF-ON, and an application thereof. The polycarbonate-based polymer according to an embodiment of the present disclosure can be applied as a drug carrier, a moisture superabsorbent biodegradable material, an environmentally friendly biodegradable material, and the like. Additionally, the hydrophobic polycarbonate-based polymer according to an embodiment of the present disclosure can block (OFF) the biodegradation of a biodegradable material with a hydrolysis mechanism until a desired time point and trigger (ON) the biodegradation at a desired time point, so that the biodegradable OFF-ON material containing the hydrophobic polycarbonate-based polymer can be applied to drug delivery, biodegradable medical devices for human transplantation, biodegradable devices for environmental monitoring, bioplastics, transient electronics, and the like.

## Description

### [Technical Field]

The present disclosure relates to a novel polycarbonate-based polymer capable of adjusting a biodegradation rate by various methods including biodegradation off-on, and an application thereof.

### [Background Art]

A biodegradable material is being applied to various fields such as packaging materials, automotive parts, electrical and electronic parts, and construction materials using biodegradable plastics as well as a medicine field. Among the biodegradable materials, bioplastics are expected to have an annual production increasing by nearly 3 times from 2.22 million tons in 2022 to 6.3 million tons in 2028. In particular, a polylactide (PLA)-based polymer or a polyhydroxyalkanoate (PHA)-based polymer, which is a biodegradable bioplastic susceptible to hydrolysis, used for the human body or environment, accounted for 24.6% of the market share in 2022 and is expected to account for 46.8%, which is nearly a half, by 2028. Recently, as environmental pollution issues have emerged globally, a study of biodegradable materials is becoming more active.

The biodegradable material needs to extend biodegradation until the desired period by blocking biodegradation until decomposition is required. The biodegradation mechanism of the biodegradable materials which are currently actively used is mostly hydrolysis, and the lifespan of the biodegradable material may be extended by blocking moisture penetration, but since the currently used moisture penetration suppression method such as metal thin film coating is incapable of biodegradation, there is a contradiction between the biodegradable material and a means of extending the period. In addition, there is a measure of modifying chemical properties of a biodegradable material as a means of extending the period of the biodegradable material, but it may only adjust a biodegradation rate and has a limitation in that it is difficult to adjust the timing of biodegradation.

### [Related Art Documents]

### [Patent Document]

(Patent Document 0001) Korean Patent Registration No. 10-0994150 (May 13, 2004)

### [Disclosure]

### [Technical Problem]

An object of the present disclosure is to provide a polycarbonate-based polymer having a novel structure and a biodegradation off-on material capable of adjusting the timing of biodegradation using the same.

### [Technical Solution]

In one general aspect, a novel polycarbonate-based polymer includes a repeating unit represented by the following Chemical Formula 1, wherein R¹ is released from the polycarbonate-based polymer by artificial stimulation, and a hydroxyl group is recovered:

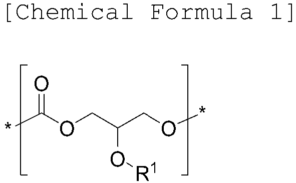

wherein R¹ is a chain type (C3-C40)alkyl group; a branched (C3-C40)alkyl group; a (C3-C40)cycloalkyl group; a (C3-C40)heterocycloalkyl group; a (C3-C40)alkenyl group; a (C3-C40)alkynyl group; a (C1-C40)heteroalkyl group; a (C6-C40)aryl group; a (C3-C40)heteroaryl group; a (C6-C40)aryl(C1-C40)alkyl group; a (C2-C40)alkyl(C6-C40)aryl group; a silyl group which is -Si(R²)(R³)(R⁴); an acyl group which is -C(=O)R⁵, -C(=O)NHR⁶, -C(=O)NR⁷₂ or -C(=O)OR⁸; or a sulfone group which is -S(=O)₂R⁹; R² to R⁴ are independently of one another hydrogen, (C1-C40)alkyl group, or (C6-C40)aryl group, but at least one of R² to R⁴ is (C1-C40)alkyl group or (C6-C40)aryl group; R⁵ to R⁹ are independently of one another a (C1-C40)alkyl group, a (C3-C40)alkenyl group, a (C3-C40)alkynyl group, a (C3-C40)cycloalkyl group, a (C3-C40)heterocycloalkyl group, a (C6-C40)aryl group, a (C3-C40)heteroaryl group, a (C6-C40)aryl(C1-C40)alkyl group, a (C1-C40)alkyl(C6-C40)aryl group, or a substituent derived from a hydrophilic polymer; and * is a binding site.

The polycarbonate-based polymer according to an exemplary embodiment of the present disclosure may be a hydrophobic polycarbonate-based polymer.

The polycarbonate-based polymer according to an exemplary embodiment of the present disclosure may be a hydrolysis-resistant polycarbonate-based polymer, and R¹ may be a chain type a (C3-C40)alkyl group; a branched (C3-C40)alkyl group; a (C3-C40)cycloalkyl group; a (C3-C40)heterocycloalkyl group; a (C3-C40)alkenyl group; a (C3-C40)alkynyl group; a (C1-C40)heteroalkyl group; a (C6-C40)aryl group; a (C3-C40)heteroaryl group; a (C6-C40)aryl(C1-C40)alkyl group; or a (C2-C40)alkyl(C6-C40)aryl group.

According to an exemplary embodiment of the present disclosure, R¹ may be a chain type (C3-C20)alkyl group; a branched (C3-C20)alkyl group; a (C3-C20)cycloalkyl group; a (C3-C20)heterocycloalkyl group; a (C1-C20)alkoxy(C1-C20)alkyl group; a (C3-C20)alkenyl group; a silyl group which is -Si(R²)(R³)(R⁴); an acyl group which is -C(=O)R⁵, - C(=O)NHR⁶, -C(=O)NR⁷₂, or -C(=O)OR⁸; or an sulfone group which is -S(=O)₂R⁹; R² to R⁴ may be independently of one another a (C1-C20)alkyl group or a (C6-C20)aryl group, R⁵ to R⁹ may be independently of one another a (C1-C20)alkyl group, a (C3-C20)alkenyl group, a (C3-C20)alkynyl group, a (C3-C20)cycloalkyl group, a (C3-C20)heterocycloalkyl group, a (C6-C20)aryl group, a (C3-C20)heteroaryl group, a (C6-C20)aryl(C1-C20)alkyl group, or a (C1-C20)alkyl(C6-C20)aryl group.

According to an exemplary embodiment of the present disclosure, R⁵ to R⁹ may be independently of one another any one selected from the group consisting of a (C1-C20)alkyl group, a (C3-C20)cycloalkyl group, a (C3-C20)heterocycloalkyl group, a substituent represented by the following Chemical Formula 3 or a substituent represented by the following Chemical Formula 4:

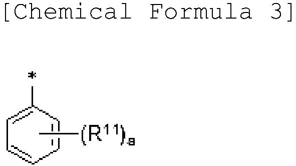

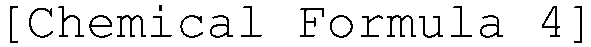

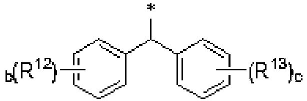

wherein R¹¹ to R¹³ are independently of one another a (C1-C7)alkyl group, and a to c are independently of one another an integer selected from 0 to 3.

The hydrophobic polycarbonate-based polymer according to an exemplary embodiment of the present disclosure may be grafted with a hydrophilic brush.

The hydrophilic brush according to an exemplary embodiment of the present disclosure may be (C1-200)alkyl(C4-10)heteroalkyl sulfobetaine, (C1-200)alkyl((C4-10)heteroalkyl sulfobetaine)₂, branched (C2-200)alkyl(C4-10)heteroalkyl sulfobetaine, (C1-200)alkyl(C4-10)heteroalkyl carboxybetaine, (C1-200)alkyl((C4-10)heteroalkyl carboxybetaine)₂, branched (C2-200)alkyl(C4-10)heteroalkyl carboxybetaine, (C1-200)alkyl(C4-10)heteroalkyl phosphobetaine, (C1-200)alkyl((C4-10)heteroalkyl carphosphobetaine)₂, branched (C2-200)alkyl(C4-10)heteroalkyl phosphobetaine, or a combination thereof, including zwitterions.

The hydrophobic polycarbonate-based polymer according to an exemplary embodiment of the present disclosure may have a number average molecular weight (Mₙ) of 10,000 to 1,000,000 g/mol.

The hydrophobic polycarbonate-based polymer according to an exemplary embodiment of the present disclosure may have a melting point of 43 to 50°C.

The polycarbonate-based polymer according to an exemplary embodiment of the present disclosure may be a hydrophilic polycarbonate-based polymer, and in Chemical Formula 1, R¹ may be an acyl group which is -C(=O)R⁵, - C(=O)NHR⁶, -C(=O)NR⁷₂, or -C(=O)OR⁸; or a sulfone group which is -S(=O)₂R⁹, and R⁵ to R⁹ may be independently of one another a substituent derived from a hydrophilic polymer.

The hydrophilic polymer may be any one selected from the group consisting of (CH₂CH₂O)₁₋₄₀ethylene glycol; ((CH₂CH₂O)₁₋₄₀)₂diethylene glycol; branched (CH₂CH₂O)₁₋₄₀ethylene glycol; (C1-40)alkyl(C4-10)heteroalkyl sulfobetaine; (C1-40)alkyl((C4-10)heteroalkyl sulfobetaine)₂; branched (C1-40)alkyl(C4-10)heteroalkyl sulfobetaine; (C1-40)alkyl(C4-10)heteroalkyl carboxybetaine; (C1-40)alkyl((C4-10)heteroalkyl carboxybetaine)₂; branched (C1-40)alkyl(C4-10)heteroalkyl carboxybetaine; (C1-40)alkyl(C4-10)heteroalkyl phosphobetaine; (C1-40)alkyl((C4-10)heteroalkyl carphosphobetaine)₂; branched (C1-40)alkyl(C4-10)heteroalkyl phosphobetaine; (CH₂COH)_{1~40}vinyl alcohol; ((CH₂COH)_{1~40})₂divinyl alcohol; branched (CH₂COH)_{1~40}vinyl alcohol; (CH₂COOH)₁₋₄₀acrylic acid; ((CH₂COOH)₁₋₄₀)₂diacrylic acid; branched (CH₂COOH)₁₋₄₀acrylic acid; (CH₂COOM)₁₋₄₀acrylate; ((CH₂COOM)₁₋₄₀)₂diacrylate; branched (CH₂COOM)₁₋₄₀acrylate; (CH₂C(CH₃)(C(=OOH))₁₋₄₀methacrylic acid; ((CH₂C(CH₃)(C (=OOH))₁₋₄₀)₂dimethacrylic acid; branched (CH₂C(CH₃)(C (=OOH)) ₁₋₄₀methacrylic acid; (CH₂C(CH₃)(C(=OOM)) ₁₋₄₀methacrylatelate; ((CH₂C(CH₃)(C(=OOM))₁₋₄₀)₂dimethacrylatelate; branched (CH₂C(CH₃)(C(=OOM))₁₋₄₀methacrylate; (CH₂C(CH₃)(C(=O)OH))₁₋₄₀2-propylacrylic acid; ((CH₂C(CH₃)(C(=O)OH))₁₋₄₀)₂di-2-propylacrylic acid; branched (CH₂C(CH₃)(C(=O)OH))₁₋₄₀2-propylacrylic acid; (CH₂C(CH₃)(C(=O)OM))₁₋₄₀2-propylacrylate; (((CH₂C(CH₃)(C(=O)OM))₁₋₄₀)₂di-2-propylacrylate; branched (CH₂C(CH₃)(C(=O)OM))₁₋₄₀2-propylacrylate; (CH₂CH(C(=O)NH₂)₁₋₄₀acrylamide; ((CH₂CH(C(=O)NH₂)₁₋₄₀)₂diacrylamide; branched (CH₂CH(C(=O)NH₂)₁₋₄₀acrylamide; (CH₂CH(C(=O)NH(CH(CH₃)₂)))₁₋₄₀N-isopropylacrylamide; ((CH₂CH(C(=O)NH(CH(CH₃)₂)))₁₋₄₀)₂diN-isopropylacrylamide; branched (CH₂CH(C (=O) NH (CH(CH₃)₂)))₁₋₄₀N-isopropylacrylamide; (CH₂CH(C(=ONHCH₂CH₂OH)))₁₋₄₀hydroxyethyl methacrylamide; ((CH₂CH(C(=ONHCH₂CH₂OH)))₁₋₄₀)₂dihydroxyethyl methacrylamide; branched (CH₂CH(C(=ONHCH₂CH₂OH)))₁₋₄₀hydroxyethyl methacrylamide; (CH₂CH(C(=ONHCH₂CH(OH)CH₃)))₁₋₄₀2-hydroxypropyl methacrylamide; ((CH₂CH(C(=ONHCH₂CH(OH)CH₃)))₁₋₄₀₎di-2-hydroxypropyl methacrylamide; branched (CH₂CH(C(=ONHCH₂CH(OH)CH₃)))₁₋₄₀2-hydroxypropyl methacrylamide; (CH₂C(-OSO₃M))₁₋₄₀vinyl sulfate; ((CH₂C(-OSO₃M))₁₋₄₀)₂divinyl sulfate; branched (CH₂C(-OSO₃M))₁₋₄₀vinyl sulfate; (CH₂-4-C₆H₆SO₃H)₁₋₄₀4-styrenesulfonic acid; ((CH₂-4-C₆H₆SO₃H)₁₋₄₀)₂di4-styrenesulfonic acid; branched (CH₂-4-C₆H₆SO₃H)₁₋₄₀4-styrenesulfonic acid; (CH₂-4-C₆H₆SO₃NH₄)₁₋₄₀4-ammonium styrenesulfonate; ((CH₂-4-C₆H₆SO₃NH₄)₁₋₄₀)₂di4-ammonium styrenesulfonate; branched (CH₂-4-C₆H₆SO₃NH₄)₁₋₄₀4-ammonium styrenesulfonate; (CH₂C₆H₆SO₃M)₁₋₄₀4-styrenesulfonate; ((CH₂C₆H₆SO₃M)₁₋₄₀)₂di4-styrenesulfonate; branched (CH₂C₆H₆SO₃M)₁₋₄₀4-styrenesulfonate; (CHCH₂NH₂)₁₋₄₀alkylamine; ((CHCH₂NH₂)₁₋₄₀)₂dialkylamine; branched (CHCH₂NH₂)₁₋₄₀alkylamine; (CHCH₂NH₂·HCl)₁₋₄₀alkylaminehydrochloride; ((CHCH₂NH₂·HCl)₁₋₄₀)₂dialkylaminehydrochloride; branched (CHCH₂NH₂·HCl)₁₋₄₀alkylaminehydrochloride; (CH2_{N}(CH2_{C}H2_{N})1₋₂ or (CH₂CH₂N(CH₂CH₂NH₂)₂)CH₂CH₂NHCH₂)₁₋₄₀ethyleneimine; ((CH₂N(CH₂CH₂N)₁₋₂ or (CH₂CH₂N(CH₂CH₂NH₂)₂)CH₂CH₂NHCH₂)₁₋₄₀)₂diethyleneimine; (CH₂N(CH₂CH₂N·HCl)₁₋₂ or (CH₂CH₂N(CH₂CH₂NH₂·HCl)₂)CH₂CH₂NHCH₂)₁₋₄₀ethyleneiminehydrochloride; ((CH₂N(CH₂CH₂N·HCl)₁₋₂ or (CH₂CH₂N(CH₂CH₂NH₂·HCl)₂)CH₂CH₂NHCH₂)₁₋₄₀)₂diethyleneiminehydrochloride; (CH₂SO₃M)₁₋₄₀vinyl sulfonate; ((CH₂SO₃M)₁₋₄₀)₂divinyl sulfonate; branched (CH₂SO₃M)₁₋₄₀vinyl sulfonate; (CH₂CHC(=O)NH₂))₁₋₄₀acrylamide; ((CH₂CHC(=O)NH₂))₁₋₄₀)₂diacrylamide; branched (CH₂CHC(=O)NH₂))₁₋₄₀acrylamide (CH₂CH(C(=O)NHCH(CH₃)₂))₁₋₄₀N-isopropylacrylamide; ((CH₂CH(C(=O)NHCH(CH₃)₂))₁₋₄₀)₂di-N-isopropylacrylamide; branched (CH₂CH(C(=O)NHCH(CH₃)₂))₁₋₄₀N-isopropylacrylamide; (CH₂(cyclic CHCH₂N⁺(CH₃)₂CH₂CH·Cl⁻)CH₂)₁₋₄₀tetramethyl pyrrolidium chloride; ((CH₂(cyclic CHCH₂N⁺(CH₃)₂CH₂CH·Cl⁻)CH₂)₁₋₄₀)₂ditetramethyl pyrrolidium chloride; branched (CH₂(cyclic CHCH₂N⁺(CH₃)₂CH₂CH·Cl⁻)CH₂)₁₋₄₀tetramethyl pyrrolidium chloride; SiH₂(CH₂CH₂O)₁₋₄₀silylethylene glycol; branched SiH₂((CH₂CH₂O)₁₋₄₀)silylethylene glycol; SiH((CH₂CH₂O)₁₋₄₀)₂silyl di(ethylene glycol); Si((CH₂CH₂O)₁₋₄₀)₃silyl tri(ethylene glycol); SiH₂(CH₂COH)_{1~40}silylvinyl alcohol; branched SiH₂O(CH₂COH)_{1~40}silylvinyl alcohol; SiH((CH₂COH)_{1~40})₂silyl di(vinyl alcohol); Si((CH2_{C}OH)1_{~40)}3ₛilyl tri(vinyl alcohol); SiH₂(CH₂COOH)₁₋₄₀silylacrylic acid; branched SiH₂(CH₂COOH)₁₋₄₀silylacrylic acid; SiH((CH₂COOH)₁₋₄₀)₂silyl di(acrylic acid); Si((CH₂COOH)₁₋₄₀)₂silyl tri(acrylic acid); SiH₂(CH₂COOM)₁₋₄₀silylacrylate; branched SiH₂(CH₂COOM)₁₋₄₀silylacrylate; SiH((CH₂COOM)₁₋₄₀)₂silyl di(acrylate); Si((CH₂COOM)₁₋₄₀)₃silyl tri(acrylate); SiH₂(CH₂C(CH₃)(C(=O0H))₁₋₄₀silyl methacrylic acid; branched SiH₂(CH₂C(CH₃)(C(=O0H))₁₋₄₀silyl methacrylic acid; SiH((CH₂C(CH₃)(C(=O0H))₁₋₄₀)₂silyl di(methacrylic acid); Si((CH₂C(CH₃)(C(=O0H))₁₋₄₀)₃silyl tri(methacrylic acid); SiH₂(CH₂C(CH₃)(C(=O0M))₁₋₄₀silyl methacrylate; branched SiH₂(CH₂C(CH₃)(C(=O0M))₁₋₄₀silyl methacrylate; SiH((CH₂C(CH₃)(C(=O0M))₁₋₄₀)₂silyl di(methacrylate); Si((CH₂C(CH₃)(C(=O0M))₁₋₄₀)₃silyl tri(methacrylate); SiH₂(CH₂C(CH₃)(C(=O)OH))₁₋₄₀silyl-2-propylacrylic acid; branched SiH₂(CH₂C(CH₃)(C(=O)OH))₁₋₄₀silyl-2-propylacrylic acid; SiH((CH₂C(CH₃)(C(=O)OH))₁₋₄₀)₂silyl di(2-propylacrylic acid); Si((CH₂C(CH₃)(C(=O)OH))₁₋₄₀)₃silyl tri(2-propylacrylic acid); SiH₂(CH₂C(CH₃)(C(=O)OM))₁₋₄₀silyl-2-propylacrylate; branched SiH₂(CH₂C(CH₃)(C(=O)OM))₁₋₄₀silyl-2-propylacrylate; SiH(((CH₂C(CH₃)(C(=O)OM))₁₋₄₀₎)₂silyl di(2-propylacrylate); Si(((CH₂C(CH₃)(C(=O)OM))₁₋₄₀₎)₂silyl tri(2-propylacrylate); SiH₂(CH₂CH(C(=O)NH₂)₁₋₄₀silylacrylamide; branched SiH₂(CH₂CH(C(=O)NH₂)₁₋₄₀silylacrylamide; SiH((CH₂CH(C(=O)NH₂)₁₋₄₀)₂silyl di(acrylamide); Si((CH₂CH(C(=O)NH₂)₁₋₄₀)₃silyl tri(acrylamide); SiH₂(CH₂CH(C(=O)NH(CH(CH₃)₂)))₁₋₄₀silylN-isopropylacrylamide; branched SiH₂O(CH₂CH(C(=O)NH(CH(CH₃)₂)))₁₋₄₀silylN-isopropylacrylamide; SiH((CH₂CH(C(=O)NH(CH(CH₃)₂)))₁₋₄₀)₂silyl di(N-isopropylacrylamide); Si((CH₂CH(C(=O)NH(CH(CH₃)₂)))₁₋₄₀)₃silyl tri(N-isopropylacrylamide); SiH₂(CH₂CH(C(=ONHCH₂CH₂OH)))₁₋₄₀silylhydroxyethyl methacrylamide; branched SiH₂(CH₂CH(C(=ONHCH₂CH₂OH)))₁₋₄₀silylhydroxyethyl methacrylamide; SiH((CH₂CH(C(=ONHCH₂CH₂OH)))₁₋₄₀)₂silyl di(hydroxyethyl methacrylamide); SiH((CH₂CH(C(=ONHCH₂CH₂OH)))₁₋₄₀)₃silyl tri(hydroxyethyl methacrylamide); SiH₂(CH₂CH(C(=ONHCH₂CH(OH)CH₃)))₁₋₄₀silyl-2-hydroxypropyl methacrylamide; branched SiH₂(CH₂CH(C(=ONHCH₂CH(OH)CH₃)))₁₋₄₀silyl-2-hydroxypropyl methacrylamide; SiH((CH₂CH(C(=ONHCH₂CH(OH)CH₃)))₁₋₄₀)₂silyl di(2-hydroxypropyl methacrylamide); Si((CH₂CH(C(=ONHCH₂CH(OH)CH₃)))₁₋₄₀)₃silyl tri(2-hydroxypropyl methacrylamide); SiH₂(CH₂C(-OSO₃M))₁₋₄₀silylvinyl sulfate; branched SiH₂(CH₂C(-OSO₃M))₁₋₄₀silylvinyl sulfate; SiH((CH₂C(-OSO₃M))₁₋₄₀)₂silyl di(vinyl sulfate); SiH((CH₂C(-OSO₃M))₁₋₄₀)₃silyl tri(vinyl sulfate); SiH₂(CH₂-4-C₆H₆SO₃H)₁₋₄₀silyl4-styrenesulfonic acid; branched SiH₂(CH₂-4-C₆H₆SO₃H)₁₋₄₀silyl4-styrenesulfonic acid; SiH((CH₂-4-C₆H₆SO₃H)₁₋₄₀)₂silyl di(4-styrenesulfonic acid); SiH((CH₂-4-C₆H₆SO₃H)₁₋₄₀)₃silyl tri(4-styrenesulfonic acid); SiH2₍CH2₋4-C₆H₆SO₃NH₄)₁₋₄₀silyl4-ammonium styrenesulfonate; branched SiH₂(CH₂-4-C₆H₆SO₃NH₄)₁₋₄₀silyl4-ammonium styrenesulfonate; SiH((CH₂-4-C₆H₆SO₃NH₄)₁₋₄₀)₂silyl di(4-ammonium styrenesulfonate); SiH((CH₂-4-C₆H₆SO₃NH₄)₁₋₄₀)₃silyl tri(4-ammonium styrenesulfonate); SiH₂(CH₂C₆H₆SO₃M)₁₋₄₀silyl 4-styrenesulfonate; branched SiH₂(CH₂C₆H₆SO₃M)₁₋₄₀silyl 4-styrenesulfonate; SiH((CH₂C₆H₆SO₃M)₁₋₄₀)₂silyl di(4-styrenesulfonate); SiH((CH₂C₆H₆SO₃M)₁₋₄₀)₃silyl tri(4-styrenesulfonate); SiH2₍CHCH2_{N}H2₎1₋₄₀ₛilylalkylamine; branched SiH₂(CHCH₂NH₂)₁₋₄₀silylalkylamine; SiH((CHCH₂NH₂)₁₋₄₀)₂silyl di(alkylamine); SiH((CHCH₂NH₂)₁₋₄₀)₃silyl tri(alkylamine); SiH2₍CHCH2_{N}H2_{·}HCl)1₋₄₀silylalkylaminehydrochloride; branched SiH₂(CHCH₂NH₂·HCl)₁₋₄₀silylalkylaminehydrochloride; SiH((CHCH₂NH₂·HCl)₁₋₄₀)₂silyl di(alkylaminehydrochloride); SiH((CHCH₂NH₂·HCl)₁₋₄₀)₃silyl tri(alkylaminehydrochloride); SiH₂(CH₂N(CH₂CH₂N)₁₋₂ or (CH₂CH₂N(CH₂CH₂NH₂)₂)CH₂CH₂NHCH₂)₁₋₄₀silylethyleneimine; SiH((CH₂N(CH₂CH₂N)₁₋₂ or SiH₂O(CH₂CH₂N(CH₂CH₂NH₂)₂)CH₂CH₂NHCH₂)₁₋₄₀)₂silyl di(ethyleneimine) ; Si((CH₂N(CH₂CH₂N)₁₋₂ or SiH₂O(CH₂CH₂N(CH₂CH₂NH₂)₂)CH₂CH₂NHCH₂)₁₋₄₀)₃silyl tri (ethyleneimine) ; SiH₂(CH₂N(CH₂CH₂N·HCl)₁₋₂ or (CH₂CH₂N(CH₂CH₂NH₂ ·HCl)₂)CH₂CH₂NHCH₂)₁₋₄₀silylethyleneimine·hydrochloride; SiH ((CH₂N(CH₂CH₂N·HCl)₁₋₂ or (CH₂CH₂N(CH₂CH₂NH₂ ·HCl)₂)CH₂CH₂NHCH₂)₁₋₄₀)₂silyl di (ethyleneimine·hydrochloride); Si((CH₂N(CH₂CH₂N·HCl)₁₋₂ or (CH₂CH₂N(CH₂CH₂NH₂ ·HCl)₂)CH₂CH₂NHCH₂)₁₋₄₀)₃silyl tri(ethyleneimine·hydrochloride); SiH₂(CH₂SO₃M)₁₋₄₀silylvinyl sulfonate; branched SiH₂(CH₂SO₃M)₁₋₄₀silyl divinyl sulfonate; SiH((CH₂SO₃M)₁₋₄₀)₂silyl di(vinyl sulfonate); Si ((CH₂SO₃M)₁₋₄₀)₃silyl tri (vinyl sulfonate); SiH₂(CH₂CHC(=O)NH₂))₁₋₄₀silylacrylamide; branched SiH₂(CH₂CHC(=O) NH₂)) ₁₋₄₀silyl diacrylamide; SiH ((CH₂CHC(=O) NH₂)) ₁₋₄₀)₂silyl di (acrylamide) ; Si ((CH₂CHC(=O) NH₂)) ₁₋₄₀)₃silyl tri (acrylamide) ; SiH₂(CH₂CH(C (=O) NHCH (CH₃)₂))₁₋₄₀SilylN-isopropylacrylamide; branched SiH₂(CH₂CH(C (=O) NHCH (CH₃)₂)) ₁₋₄₀silylN-isopropylacrylamide; SiH((CH₂CH(C(=O)NHCH(CH₃)₂))₁₋₄₀)₂silyl di(N-isopropylacrylamide); Si((CH₂CH(C(=O)NHCH(CH₃)₂))₁₋₄₀)₃silyl tri(N-isopropylacrylamide); SiH₂(CH₂(cyclic CHCH₂N⁺(CH₃)₂CH₂CH·Cl⁻)CH₂)₁₋₄₀silyl tetramethyl pyrrolidium chloride; branched SiH₂(CH₂(cyclic CHCH₂N⁺(CH₃)₂CH₂CH·Cl⁻)CH₂)₁₋₄₀silyl tetramethyl pyrrolidium chloride; SiH((CH₂(cyclic SiH₂OCHCH₂N⁺(CH₃)₂CH₂CH·Cl⁻)CH₂)₁₋₄₀)₂silyl di(tetramethyl pyrrolidium chloride); and Si((CH₂(cyclic SiH₂OCHCH₂N⁺(CH₃)₂CH₂CH·Cl⁻)CH₂)₁₋₄₀)₃silyl tri(tetramethyl pyrrolidium chloride).

In another general aspect, a biodegradable composition includes the hydrophobic polycarbonate-based polymer.

The biodegradable composition according to an exemplary embodiment of the present disclosure may further include any one or more selected from the group consisting of a remote trigger heat generation source, an enzyme, and a catalyst.

The remote trigger heat generation source according to an exemplary embodiment of the present disclosure may include any one or more selected from the group consisting of infrared absorption dyes, magnetic particles, and electrical devices.

In another general aspect, a biodegradable material for blocking moisture prepared from the biodegradable composition is provided.

In another general aspect, a hydrolysis-resistant biodegradable material prepared from the biodegradable composition.

In another general aspect, a biodegradation off-on material includes: the biodegradable material for blocking moisture; and the hydrolysis-resistant biodegradable material.

The biodegradation off-on material according to an exemplary embodiment of the present disclosure may further include one or two or more biodegradation trigger layers.

In still another general aspect, a biodegradation off-on method includes: forming a moisture-blocking layer on all or a part of a surface of the hydrolysis mechanisms biodegradable material, and then forming a hydrolysis-resistant layer on all or a part of a surface of the moisture-blocking layer to turn off the biodegradation of the hydrolysis mechanism biodegradable material; and applying artificial stimulation on any one or more selected from the group consisting of the moisture-blocking layer and the hydrolysis-resistant layer to turn on the biodegradation of the hydrolysis mechanism biodegradable material.

The artificial stimulation according to an exemplary embodiment of the present disclosure may be any one or more selected from the group consisting of electromagnetic energy, thermal energy, ultrasonic energy, enzymes, and catalysts.

The turning off of biodegradation according to an exemplary embodiment of the present disclosure may be forming the moisture-blocking layer on all or a part of the surface of the hydrolysis mechanism biodegradable material, forming the biodegradation trigger layer on all or a part of the surface of the moisture-blocking layer, and forming the hydrolysis-resistant layer on all or a part of the surface of the biodegradation trigger layer.

The turning on of biodegradation according to an exemplary embodiment of the present disclosure may be applying artificial stimulation to the biodegradation trigger layer.

### [Advantageous Effects]

The polycarbonate-based polymer according to an exemplary embodiment of the present disclosure may change hydrolysis resistance, a melting point, moisture penetration resistance, a hydrolysis rate, and decomposition properties by a lipolytic enzyme, by changing the chemical structure of a specific part.

The polycarbonate-based polymer according to an exemplary embodiment of the present disclosure may be applied as an outer shell material for protecting hydrolysis-vulnerable materials, a drug carrier, a moisture superabsorbent biodegradable material, an environmentally friendly biodegradable material, and the like.

When the hydrophobic polycarbonate-based polymer according to an exemplary embodiment of the present disclosure is utilized, the biodegradation of the hydrolysis mechanism biodegradable material may be turned off until the desired time and turned on at the desired time.

The biodegradation off-on material including the hydrophobic polycarbonate-based polymer according to an exemplary embodiment of the present disclosure may be applied to drug delivery, biodegradable medical devices for human body transplant, biodegradable devices for environmental monitoring, bioplastics, transient electronics, and the like.

### [Description of Drawings]

FIG. 1 schematizes a biodegradable off-on material according to an exemplary embodiment of the present disclosure.
FIG. 2 shows experimental results confirming whether biodegradation of the polycarbonate-based polymer according to an exemplary embodiment of the present disclosure was turned off/on.

### [Best Mode]

In the present specification, unless otherwise defined, all technical terms and scientific terms have the same meanings as those commonly understood by a person skilled in the art to which the present invention pertains. The terms used herein are only for effectively describing a certain specific example and are not intended to limit the present invention.

The singular form used in the present specification may also be intended to include a plural form, unless otherwise indicated in the context.

Throughout the present specification, unless otherwise particularly stated, the word "comprise", "equipped", "contain", or "have" does not mean the exclusion of any other constituent element, but means further inclusion of other constituent elements, and elements, materials, or processes which are not further listed are not excluded.

The numerical range used in the present specification includes all values within the range including the lower limit and the upper limit, increments logically derived from the form and breadth of a defined range, all double limited values, and all possible combinations of the upper limits and the lower limits in the numerical range defined in different forms. Unless otherwise defined in the present specification, values which may be outside a numerical range due to experimental error or rounding off of a value are also included in the defined numerical range.

Unless otherwise particularly defined in the present specification, "about" may be considered as a value within 30%, 25%, 20%, 15%, 10%, or 5% of a stated value.

The term "biodegradation off-on material" of the present specification refers to a material which may turn off the degradation of the biodegradable material until a desired time and turn on the degradation of the biodegradable material at a desired time.

The term "substituted" of the present specification may mean that all or a part of hydrogens connected to carbon included in a compound are substituted with other elements or substituents, and the term "unsubstituted" may mean that all of hydrogens connected to carbon included in a compound are not substituted.

The term commonly used in the present specification may be used in the same meaning unless otherwise defined separately.

Hereinafter, the present disclosure will be described in detail. However, it is only illustrative, and the present disclosure is not limited to the specific exemplary embodiment which is illustratively described.

The present disclosure provides a novel polycarbonate-based polymer including a repeating unit represented by the following Chemical Formula 1, wherein R¹ is released from the polycarbonate-based polymer by external stimulation, and a hydroxyl group is recovered:

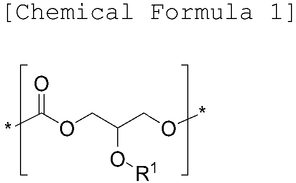

wherein R¹ is a chain type (C3-C40)alkyl group excluding a benzyl group, a (C1-C2)alkyl group, a 3-[(2-hydroxyethyl)thiol]propyl group, and an allyl group; a branched (C3-C40)alkyl group; a (C3-C40)cycloalkyl group; a (C3-C40)heterocycloalkyl group; a (C3-C40)alkenyl group; a (C3-C40)alkynyl group; a (C1-C40)heteroalkyl group; a (C6-C40)aryl group; a (C3-C40)heteroaryl group; a (C6-C40)aryl(C1-C40)alkyl group; a (C2-C40)alkyl(C6-C40)aryl group; a silyl group which is -Si(R²)(R³)(R⁴); an acyl group which is -C(=O)R⁵, -C(=O)NHR⁶, -C(=O)NR⁷₂, or -C(=O)OR⁸; or a sulfone group which is -S(=O)₂R⁹; R² to R⁴ are independently of one another hydrogen, a (C1-C40)alkyl group, or a (C6-C40)aryl group, but at least one of R² to R⁴ is a (C1-C40)alkyl group or a (C6-C40)aryl group, R⁵ to R⁹ are independently of one another a (C1-C40)alkyl group, a (C3-C40)alkenyl group, a (C3-C40)alkynyl group, a (C3-C40)cycloalkyl group, a (C3-C40)heterocycloalkyl group, a (C6-C40)aryl group, a (C3-C40)heteroaryl group, a (C6-C40)aryl(C1-C40)alkyl group, a (C1-C40)alkyl(C6-C40)aryl group, or a substituent derived from a hydrophilic polymer, and * is a binding site. When R¹ satisfies this, the polycarbonate-based polymer may recover a hydroxyl group even by a mild reaction not a hydrogenation reaction proceeding in the presence of a catalyst.

In an exemplary embodiment of the present disclosure, the (C3-C40)heterocycloalkyl group may be substituted or unsubstituted, and as a specific example, the substituted or unsubstituted (C3-C40)heterocycloalkyl group may be represented by the following Chemical Formula 2:

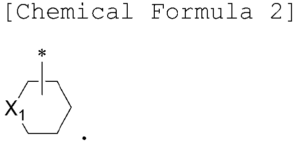

In the unsubstituted (C3-C40)heterocycloalkyl group, X₁ may be -0- or -S-. In the substituted (C3-C40)heterocycloalkyl group, X₁ may be -0- or -S-, and an alkene group (-C=C), an alkyne group (-C≡C), a halide group (-X), an alcohol group (-OH), a thiol group (-SH), an amine group (-NH₂), an amide group (-CONH), an aldehyde group (-CHO), a carboxyl group (-COOH), an azide group (-C≡N), a (C1-C8)alkoxy group (-OR), a -(C6-C20)aryl group, a (C3-C20)heteroaryl group, or a (C6-C20)aryl(C1-C10)alkyl group may be connected to a (C1-C7)alkyl group from carbon rather than X¹.

In an exemplary embodiment of the present disclosure, the artificial stimulation may be any one or more selected from the group consisting of electromagnetic energy, thermal energy, ultrasonic energy, enzymes, and catalysts.

In an exemplary embodiment of the present disclosure, the enzyme may be any one or more selected from the group consisting of lipase, phospholipase, cholesteryl esterase, magnesium-dependent lipase, and fatty acid hydrolase, but is not limited thereto.

In an exemplary embodiment of the present disclosure, the catalyst may be betacyclodextrin, but is not limited thereto as long as it may perform the same or similar functions.

In an exemplary embodiment of the present disclosure, the polycarbonate-based polymer may be a hydrophobic polycarbonate-based polymer.

In an exemplary embodiment of the present disclosure, the polycarbonate-based polymer may be a hydrolysis-resistant polycarbonate-based polymer, and R¹ may be a chain type (C3-C40)alkyl group; a branched (C3-C40)alkyl group; a (C3-C40)cycloalkyl group; a (C3-C40)heterocycloalkyl group; a (C3-C40)alkenyl group; a (C3-C40)alkynyl group; a (C1-C40)heteroalkyl group; a (C6-C40)aryl group; a (C3-C40)heteroaryl group; a (C6-C40)aryl(C1-C40)alkyl group; or a (C2-C40)alkyl(C6-C40)aryl group. When this is satisfied, the hydrolysis resistance may be particularly strong.

In an exemplary embodiment of the present disclosure, in Chemical Formula 1 of the hydrophobic polycarbonate-based polymer, R¹ may be a chain type (C3-C20)alkyl group; a branched (C3-C20)alkyl group; a (C3-C20)cycloalkyl group; a (C3-C20)heterocycloalkyl group; a (C1-C20)alkoxy(C1-C20)alkyl group; a (C3-C20)alkenyl group; a silyl group which is -Si(R²)(R³)(R⁴); an acyl group which is -C(=O)R⁵, - C(=O)NHR⁶, -C(=O)NR⁷₂, or -C(=O)OR⁸; or a sulfone group which is -S(=O)₂R⁹; R² to R⁴ may be independently of one another a (C1-C20)alkyl group or a (C6-C20)aryl group; and R⁵ to R⁹ may be independently of one another a (C1-C20)alkyl group, a (C3-C20)alkenyl group, a (C3-C20)alkynyl group, a (C3-C20)cycloalkyl group, a (C3-C20)heterocycloalkyl group, a (C6-C20)aryl group, a (C3-C20)heteroaryl group, a (C6-C20)aryl(C1-C20)alkyl group, or (C1-C20)alkyl(C6-C20)aryl group.

In an exemplary embodiment of the present disclosure, in Chemical Formula 1 of the hydrophobic polycarbonate-based polymer, R⁵ to R⁹ may be independently of one another any one selected from the group consisting of a (C1-C20)alkyl group, a (C3-C20)cycloalkyl group, a (C3-C20)heterocycloalkyl group, a substituent represented by the following Chemical Formula 3, and a substituent represented by the following Chemical Formula 4:

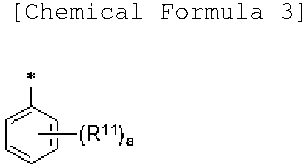

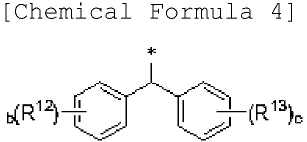

wherein R¹¹ to R¹³ are independently of one another a (C1-C7)alkyl group, and a to c are independently of one another an integer selected from 0 to 3.

In an exemplary embodiment of the present disclosure, the hydrophobic polycarbonate-based polymer may be grafted with a hydrophilic brush. When this is satisfied, the hydrophobic polycarbonate-based polymer may be prevented from being decomposed before the desired timing under the conditions such as an internal environment where a lipolytic enzyme is present.

In an exemplary embodiment of the present disclosure, the hydrophilic brush may be (C1-200)alkyl(C4-10)heteroalkyl sulfobetaine, (C1-200)alkyl((C4-10)heteroalkyl sulfobetaine)₂, branched (C2-200)alkyl(C4-10)heteroalkyl sulfobetaine, (C1-200)alkyl(C4-10)heteroalkyl carboxybetaine, (C1-200)alkyl((C4-10)heteroalkyl carboxybetaine)₂, branched (C2-200)alkyl(C4-10)heteroalkyl carboxybetaine, (C1-200)alkyl(C4-10)heteroalkyl phosphobetaine, (C1-200)alkyl((C4-10)heteroalkyl carphosphobetaine)₂, branched (C2-200)alkyl(C4-10)heteroalkyl phosphobetaine, or a combination thereof, including zwitterions.

In an exemplary embodiment of the present disclosure, the hydrophobic polycarbonate-based polymer may have a number average molecular weight (Mₙ) of 10,000 to 1,000,000 g/mol, specifically 15,000 to 800,000 g/mol, but is not limited thereto as long as the purpose of the present disclosure is achieved.

In an exemplary embodiment of the present disclosure, the hydrophobic polycarbonate-based polymer may have a melting point of 43 to 50°C. When this is satisfied, the polymer may perform a transition to a liquid phase by heat without showing human toxicity.

In an exemplary embodiment of the present disclosure, the polycarbonate-based polymer may be a hydrophilic polymer, and in Chemical Formula 1, R¹ may be an acyl group which is -C(=O)R⁵, -C(=O)NHR⁶, -C(=O)NR⁷₂, or -C(=O)OR⁸; or a sulfone group which is -S(=O)₂R⁹, and R⁵ to R⁹ may be independently of one another a substituent derived from a hydrophilic polymer.

In an exemplary embodiment of the present disclosure, the hydrophilic polymer may be any one selected from the group consisting of (CH₂CH₂O)₁₋₄₀ethylene glycol; ((CH₂CH₂O)₁₋₄₀)₂diethylene glycol; branched (CH₂CH₂O)₁₋₄₀ethylene glycol; (C1-40)alkyl(C4-10)heteroalkyl sulfobetaine; (C1-40)alkyl((C4-10)heteroalkyl sulfobetaine)₂; branched (C1-40)alkyl(C4-10)heteroalkyl sulfobetaine; (C1-40)alkyl(C4-10)heteroalkyl carboxybetaine; (C1-40)alkyl((C4-10)heteroalkyl carboxybetaine)₂; branched (C1-40)alkyl(C4-10)heteroalkyl carboxybetaine; (C1-40)alkyl(C4-10)heteroalkyl phosphobetaine; (C1-40)alkyl((C4-10)heteroalkyl carphosphoretaine)₂; branched (C1-₄₀)alkyl(C4-10)heteroalkyl phosphobetaine; (CH₂COH)₁₋₄₀vinyl alcohol; ((CH₂COH)_{1~40})₂divinyl alcohol; branched (CH₂COH)_{1~40}vinyl alcohol; (CH₂COOH)_{1~40}acrylic acid; ((CH₂COOH)₁₋₄₀)₂diacrylic acid; branched (CH₂COOH)₁₋₄₀acrylic acid; (CH₂COOM)₁₋₄₀acrylate; ((CH₂COOM)₁₋₄₀)₂diacrylate; branched (CH₂COOM)₁₋₄₀acrylate; (CH₂C(CH₃)(C (=OOH))₁₋₄₀methacrylic acid; ((CH₂C(CH₃)(C (=OOH)) ₁₋₄₀)₂dimethacrylic acid; branched (CH₂C(CH₃)(C (=OOH)) ₁₋₄₀methacrylic acid; (CH₂C(CH₃)(C (=OOM))₁₋₄₀methacrylate; ((CH₂C(CH₃)(C (=OOM)) ₁₋₄₀)₂dimethacrylate; branched (CH₂C(CH₃)(C (=OOM))₁₋₄₀methacrylate; (CH₂C(CH₃)(C(=O)OH))₁₋₄₀2-propylacrylic acid; ((CH₂C(CH₃)(C(=O)OH)) ₁₋₄₀)₂di-2-propylacrylic acid; branched (CH₂C(CH₃)(C(=O)OH))₁₋₄₀2-propylacrylic acid; (CH₂C(CH₃)(C(=O)OM)) ₁₋₄₀2-propylacrylate; (((CH₂C(CH₃)(C(=O)OM))₁₋₄₀)₂di-2-propylacrylate; branched (CH₂C(CH₃)(C(=O)OM)) ₁₋₄₀2-propylacrylate; (CH₂CH(C (=O) NH₂)₁₋₄₀acrylamide; ((CH₂CH(C(=O)NH₂)₁₋₄₀)₂diacrylamide; branched (CH₂CH(C (=O) NH₂)₁₋₄₀acrylamide; (CH₂CH(C(=O)NH(CH(CH₃)₂)))₁₋₄₀N-isopropylacrylamide; ((CH₂CH(C(=O)NH(CH(CH₃)₂)))₁₋₄₀)₂diN-isopropylacrylamide; branched (CH₂CH(C(=O)NH(CH(CH₃)₂)))₁₋₄₀N-isopropylacrylamide; (CH₂CH(C (=ONHCH₂CH₂OH)) )₁₋₄₀hydroxyethyl methacrylamide; ((CH₂CH(C (=ONHCH₂CH₂OH)))₁₋₄₀)₂dihydroxyethyl methacrylamide; branched (CH₂CH(C(=ONHCH₂CH₂OH)))₁₋₄₀hydroxyethyl methacrylamide; (CH₂CH(C(=ONHCH₂CH(OH)CH₃)))₁₋₄₀2-hydroxypropyl methacrylamide; ((CH₂CH(C(=ONHCH₂CH(OH)CH₃)))₁₋₄₀₎di-2-hydroxypropyl methacrylamide; branched (CH₂CH(C(=ONHCH₂CH(OH)CH₃)))₁₋₄₀2-hydroxypropyl methacrylamide; (CH₂C(-OSO₃M))₁₋₄₀vinyl sulfate; ((CH₂C(-OSO₃M))₁₋₄₀)₂divinyl sulfate; branched (CH₂C(-OSO₃M))₁₋₄₀vinyl sulfate; (CH₂-4-C₆H₆SO₃H)₁₋₄₀4-styrenesulfonic acid; ((CH₂-4-C₆H₆SO₃H)₁₋₄₀)₂di4-styrenesulfonic acid; branched (CH₂-4-C₆H₆SO₃H)₁₋₄₀4-styrenesulfonic acid; (CH₂-4-C₆H₆SO₃NH₄)₁₋₄₀4-ammonium styrenesulfonate; ((CH₂-4-C₆H₆SO₃NH₄)₁₋₄₀)₂di4-ammonium styrenesulfonate; branched (CH₂-4-C₆H₆SO₃NH₄)₁₋₄₀4-ammonium styrenesulfonate; (CH₂C₆H₆SO₃M)₁₋₄₀4-styrenesulfonate; ((CH₂C₆H₆SO₃M)₁₋₄₀)₂di4-styrenesulfonate; branched (CH₂C₆H₆SO₃M)₁₋₄₀4-styrenesulfonate; (CHCH₂NH₂)₁₋₄₀alkylamine; ((CHCH₂NH₂)₁₋₄₀)₂dialkylamine; branched (CHCH₂NH₂)₁₋₄₀alkylamine; (CHCH₂NH₂·HCl)₁₋₄₀alkylaminehydrochloride; ((CHCH₂NH₂·HCl)₁₋₄₀)₂dialkylaminehydrochloride; branched (CHCH₂NH₂·HCl)₁₋₄₀alkylaminehydrochloride; (CH2_{N}(CH2_{C}H2_{N})1₋₂ or (CH₂CH₂N(CH₂CH₂NH₂)₂)CH₂CH₂NHCH₂)₁₋₄₀ethyleneimine; ((CH₂N(CH₂CH₂N)₁₋₂ or (CH₂CH₂N(CH₂CH₂NH₂)₂)CH₂CH₂NHCH₂)₁₋₄₀)₂diethyleneimine; (CH₂N(CH₂CH₂N·HCl)₁₋₂ or (CH₂CH₂N(CH₂CH₂NH₂·HCl)₂)CH₂CH₂NHCH₂)₁₋₄₀ethyleneiminehydrochloride; ((CH₂N(CH₂CH₂N·HCl)₁₋₂ or (CH₂CH₂N(CH₂CH₂NH₂·HCl)₂)CH₂CH₂NHCH₂)₁₋₄₀)₂diethyleneiminehydrochloride; (CH₂SO₃M)₁₋₄₀vinyl sulfonate; ((CH₂SO₃M)₁₋₄₀)₂divinyl sulfonate; branched (CH₂SO₃M)₁₋₄₀vinyl sulfonate; (CH₂CHC(=O)NH₂))₁₋₄₀acrylamide; ((CH₂CHC(=O)NH₂))₁₋₄₀)₂diacrylamide; branched (CH₂CHC(=O)NH₂))₁₋₄₀acrylamide (CH₂CH(C(=O)NHCH(CH₃)₂))₁₋₄₀N-isopropylacrylamide; ((CH₂CH(C(=O)NHCH(CH₃)₂)) ₁₋₄₀)₂di-N-isopropylacrylamide; branched (CH₂CH(C(=O)NHCH(CH₃)₂))₁₋₄₀N-isopropylacrylamide; (CH₂(cyclic CHCH₂N⁺(CH₃)₂CH₂CH·Cl⁻)CH₂)₁₋₄₀tetramethyl pyrrolidium chloride; ((CH₂(cyclic CHCH₂N⁺(CH₃)₂CH₂CH·Cl⁻)CH₂)₁₋₄₀)₂ditetramethyl pyrrolidium chloride; branched (CH₂(cyclic CHCH₂N⁺(CH₃)₂CH₂CH·Cl⁻)CH₂)₁₋₄₀tetramethyl pyrrolidium chloride; SiH₂(CH₂CH₂O)₁₋₄₀silylethylene glycol; branched SiH₂((CH₂CH₂O)₁₋₄₀)silylethylene glycol; SiH((CH₂CH₂O)₁₋₄₀)₂silyl di(ethylene glycol) ; Si((CH₂CH₂O)₁₋₄₀)₃silyl tri(ethylene glycol) ; SiH₂(CH₂COH)_{1~40}silylvinyl alcohol; branched SiH₂O(CH₂COH)_{1~40}silylvinyl alcohol; SiH ((CH₂COH)₁₋₄₀)₂silyl di(vinyl alcohol); Si ((CH₂COH)₁₋₄₀)₃silyl tri (vinyl alcohol) ; SiH₂(CH₂COOH)₁₋₄₀silylacrylic acid; branched SiH₂(CH₂COOH)₁₋₄₀silylacrylic acid; SiH ((CH₂COOH)₁₋₄₀)₂silyl di (acrylic acid); Si ((CH₂COOH)₁₋₄₀)₂silyl tri (acrylic acid) ; SiH₂(CH₂COOM)₁₋₄₀silylacrylate; branched SiH₂(CH₂COOM)₁₋₄₀silylacrylate; SiH ((CH₂COOM)₁₋₄₀)₂silyl di (acrylate); Si ((CH₂COOM)₁₋₄₀)₃silyl tri (acrylate) ; SiH₂(CH₂C(CH₃)(C (=OOH)) ₁₋₄₀silyl methacrylic acid; branched SiH₂(CH₂C(CH₃)(C (=OOH)) ₁₋₄₀silyl methacrylic acid; SiH((CH₂C(CH₃)(C(=O0H))₁₋₄₀)₂silyl di(methacrylic acid); Si((CH₂C(CH₃)(C(=O0H))₁₋₄₀)₃silyl tri(methacrylic acid); SiH₂(CH₂C(CH₃)(C(=O0M))₁₋₄₀silyl methacrylate; branched SiH₂(CH₂C(CH₃)(C(=O0M))₁₋₄₀silyl methacrylate; SiH((CH₂C(CH₃)(C(=O0M))₁₋₄₀)₂silyl di(methacrylate); Si((CH₂C(CH₃)(C(=O0M))₁₋₄₀)₃silyl tri(methacrylate); SiH₂(CH₂C(CH₃)(C(=O)OH))₁₋₄₀silyl-2-propylacrylic acid; branched SiH₂(CH₂C(CH₃)(C(=O)OH))₁₋₄₀silyl-2-propylacrylic acid; SiH((CH₂C(CH₃)(C(=O)OH))₁₋₄₀)₂silyl di(2-propylacrylic acid); Si((CH₂C(CH₃)(C(=O)OH))₁₋₄₀)₃silyl tri(2-propylacrylic acid); SiH₂(CH₂C(CH₃)(C(=O)OM))₁₋₄₀silyl-2-propylacrylate; branched SiH₂(CH₂C(CH₃)(C(=O)OM))₁₋₄₀silyl-2-propylacrylate; SiH(((CH₂C(CH₃)(C(=O)OM))₁₋₄₀₎)₂silyl di(2-propylacrylate); Si(((CH₂C(CH₃)(C(=O)OM))₁₋₄₀₎)₂silyl tri(2-propylacrylate); SiH₂(CH₂CH(C(=O)NH₂)₁₋₄₀silylacrylamide; branched SiH₂(CH₂CH(C(=O)NH₂)₁₋₄₀silylacrylamide; SiH((CH₂CH(C(=O)NH₂)₁₋₄₀)₂silyl di(acrylamide); Si((CH₂CH(C(=O)NH₂)₁₋₄₀)₃silyl tri(acrylamide); SiH₂(CH₂CH(C(=O)NH(CH(CH₃)₂)))₁₋₄₀silylN-isopropylacrylamide; branched SiH₂O(CH₂CH(C(=O)NH(CH(CH₃)₂)))₁₋₄₀silylN-isopropylacrylamide; SiH((CH₂CH(C(=O)NH(CH(CH₃)₂)))₁₋₄₀)₂silyl di(N-isopropylacrylamide); Si((CH₂CH(C(=O)NH(CH(CH₃)₂)))₁₋₄₀)₃silyl tri(N-isopropylacrylamide); SiH₂(CH₂CH(C(=ONHCH₂CH₂OH)))₁₋₄₀silylhydroxyethyl methacrylamide; branched SiH₂(CH₂CH(C(=ONHCH₂CH₂OH)))₁₋₄₀silylhydroxyethyl methacrylamide; SiH((CH₂CH(C(=ONHCH₂CH₂OH)))₁₋₄₀)₂silyl di(hydroxyethyl methacrylamide); SiH((CH₂CH(C(=ONHCH₂CH₂OH)))₁₋₄₀)₃silyl tri(hydroxyethyl methacrylamide); SiH₂(CH₂CH(C(=ONHCH₂CH(OH)CH₃)))₁₋₄₀silyl-2-hydroxypropyl methacrylamide; branched SiH₂(CH₂CH(C(=ONHCH₂CH(OH)CH₃)))₁₋₄₀silyl-2-hydroxypropyl methacrylamide; SiH((CH₂CH(C(=ONHCH₂CH(OH)CH₃)))₁₋₄₀)₂silyl di(2-hydroxypropyl methacrylamide); Si((CH₂CH(C(=ONHCH₂CH(OH)CH₃)))₁₋₄₀)₃silyl tri(2-hydroxypropyl methacrylamide); SiH₂(CH₂C(-OSO₃M))₁₋₄₀silylvinyl sulfate; branched SiH₂(CH₂C(-OSO₃M))₁₋₄₀silylvinyl sulfate; SiH((CH₂C(-OSO₃M))₁₋₄₀)₂silyl di(vinyl sulfate); SiH((CH₂C(-OSO₃M))₁₋₄₀)₃silyl tri(vinyl sulfate); SiH₂(CH₂-4-C₆H₆SO₃H)₁₋₄₀silyl4-styrenesulfonic acid; branched SiH₂(CH₂-4-C₆H₆SO₃H)₁₋₄₀silyl4-styrenesulfonic acid; SiH((CH₂-4-C₆H₆SO₃H)₁₋₄₀)₂silyl di(4-styrenesulfonic acid); SiH((CH₂-4-C₆H₆SO₃H)₁₋₄₀)₃silyl tri(4-styrenesulfonic acid); SiH2₍CH2₋4-C₆H₆SO₃NH₄)₁₋₄₀silyl4-ammonium styrenesulfonate; branched SiH₂(CH₂-4-C₆H₆SO₃NH₄)₁₋₄₀silyl4-ammonium styrenesulfonate; SiH((CH₂-4-C₆H₆SO₃NH₄)₁₋₄₀)₂silyl di(4-ammonium styrenesulfonate); SiH((CH₂-4-C₆H₆SO₃NH₄)₁₋₄₀)₃silyl tri(4-ammonium styrenesulfonate); SiH₂(CH₂C₆H₆SO₃M)₁₋₄₀silyl 4-styrenesulfonate; branched SiH₂(CH₂C₆H₆SO₃M)₁₋₄₀silyl 4-styrenesulfonate; SiH((CH₂C₆H₆SO₃M)₁₋₄₀)₂silyl di(4-styrenesulfonate) ; SiH((CH₂C₆H₆SO₃M)₁₋₄₀)₃silyl tri (4-styrenesulfonate) ; SiH₂(CHCH₂NH₂)₁₋₄₀silylalkylamine; branched SiH₂(CHCH₂NH₂)₁₋₄₀silylalkylamine; SiH ((CHCH₂NH₂)₁₋₄₀)₂silyl di(alkylamine) ; SiH ((CHCH₂NH₂)₁₋₄₀)₃silyl tri(alkylamine); SiH₂(CHCH₂NH₂·HCl)₁₋₄₀silylalkylaminehydrochloride; branched SiH₂(CHCH₂NH₂·HCl)₁₋₄₀silylalkylaminehydrochloride; SiH ((CHCH₂NH₂·HCl)₁₋₄₀)₂silyl di(alkylaminehydrochloride); SiH ((CHCH₂NH₂·HCl)₁₋₄₀)₃silyl tri (alkylaminehydrochloride); SiH₂(CH₂N(CH₂CH₂N)₁₋₂ or (CH₂CH₂N(CH₂CH₂NH₂)₂)CH₂CH₂NHCH₂)₁₋₄₀silylethyleneimine; SiH ((CH₂N(CH₂CH₂N)₁₋₂ or SiH₂O(CH₂CH₂N(CH₂CH₂NH₂)₂)CH₂CH₂NHCH₂)₁₋₄₀)₂silyl di(ethyleneimine) ; Si((CH₂N(CH₂CH₂N)₁₋₂ or SiH₂O(CH₂CH₂N(CH₂CH₂NH₂)₂)CH₂CH₂NHCH₂)₁₋₄₀)₃silyl tri (ethyleneimine) ; SiH₂(CH₂N(CH₂CH₂N·HCl)₁₋₂ or (CH₂CH₂N(CH₂CH₂NH₂·HCl)₂)CH₂CH₂NHCH₂)₁₋₄₀silylethyleneimine ·hydrochloride; SiH ((CH₂N(CH₂CH₂N·HCl)₁₋₂ or (CH₂CH₂N(CH₂CH₂NH₂ ·HCl)₂)CH₂CH₂NHCH₂)₁₋₄₀)₂silyl di (ethyleneimine ·hydrochloride); Si((CH₂N(CH₂CH₂N·HCl)₁₋₂ or (CH₂CH₂N(CH₂CH₂NH₂ ·HCl)₂)CH₂CH₂NHCH₂)₁₋₄₀)₃silyl tri (ethyleneimine ·hydrochloride); SiH₂(CH₂SO₃M)₁₋₄₀silylvinyl sulfonate; branched SiH₂(CH₂SO₃M)₁₋₄₀silyl divinyl sulfonate; SiH ((CH₂SO₃M)₁₋₄₀)₂silyl di(vinyl sulfonate); Si ((CH₂SO₃M)₁₋₄₀)₃silyl tri (vinyl sulfonate); SiH₂(CH₂CHC(=O) NH₂))₁₋₄₀silylacrylamide; branched SiH₂(CH₂CHC(=O) NH₂))₁₋₄₀silyl diacrylamide; SiH ((CH₂CHC(=O) NH₂)) ₁₋₄₀)₂silyl di (acrylamide) ; Si((CH₂CHC(=O)NH₂))₁₋₄₀)₃silyl tri(acrylamide); SiH₂(CH₂CH(C(=O)NHCH(CH₃)₂))₁₋₄₀silylN-isopropylacrylamide; branched SiH₂(CH₂CH(C(=O)NHCH(CH₃)₂))₁₋₄₀silylN-isopropylacrylamide; SiH((CH₂CH(C(=O)NHCH(CH₃)₂))₁₋₄₀)₂silyl di(N-isopropylacrylamide); Si((CH₂CH(C(=O)NHCH(CH₃)₂))₁₋₄₀)₃silyl tri(N-isopropylacrylamide); SiH2₍CH2₍cyclic CHCH₂N⁺(CH₃)₂CH₂CH·Cl⁻)CH₂)₁₋₄₀silyl tetramethyl pyrrolidium chloride; branched SiH₂(CH₂(cyclic CHCH₂N⁺(CH₃)₂CH₂CH·Cl⁻)CH₂)₁₋₄₀silyl tetramethyl pyrrolidium chloride; SiH((CH₂(cyclic SiH₂OCHCH₂N⁺(CH₃)₂CH₂CH·Cl⁻)CH₂)₁₋₄₀)₂silyl di(tetramethyl pyrrolidium chloride); and Si((CH₂(cyclic SiH₂OCHCH₂N⁺(CH₃)₂CH₂CH·Cl⁻)CH₂)₁₋₄₀)₃silyl tri(tetramethyl pyrrolidium chloride).

In an exemplary embodiment of the present disclosure, the polycarbonate-based polymer may be formed by polymerizing a polycarbonate-based monomer represented by the following Chemical Formula 5:

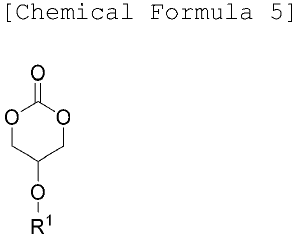

wherein R¹ is as defined in Chemical Formula 1.

In addition, the present disclosure provides a biodegradable composition including the hydrophobic polycarbonate-based polymer.

In an exemplary embodiment of the present disclosure, the biodegradable composition may further include any one or more selected from the group consisting of a remote trigger heat generation source, an enzyme, and a catalyst.

In an exemplary embodiment of the present disclosure, the remote trigger heat generation source may include any one or more selected from the group consisting of infrared absorption dyes, magnetic particles, and electrical devices.

In addition, the present disclosure provides a biodegradable material for blocking moisture prepared from the biodegradable composition. The biodegradable material for blocking moisture has an excellent moisture penetration blocking effect and may prevent external moisture from penetrating inside.

In addition, the present disclosure provides a hydrolysis-resistant biodegradable material prepared from the biodegradable composition. The hydrolysis-resistant biodegradable material has a particularly excellent hydrolysis resistant effect and may not be hydrolyzed in the human body and in everyday environments.

In addition, the present disclosure provides a biodegradation off-on material including: the biodegradable material for blocking moisture; and the hydrolysis-resistant biodegradable material. Specifically, the biodegradation off-on material may be formed of the hydrolysis-resistant biodegradable material surrounding the biodegradable material for blocking moisture, but is not limited thereto as long as the purpose of the present disclosure is achieved.

In an exemplary embodiment of the present disclosure, the biodegradation off-on material may further include one or two or more biodegradation trigger layer between the biodegradable material for blocking moisture and the hydrolysis-resistant biodegradable material.

In an exemplary embodiment of the present disclosure, the biodegradation trigger layer may be prepared from the biodegradable composition.

In an exemplary embodiment of the present disclosure, the biodegradation trigger layer may include a biodegradation trigger material-blocking layer and a biodegradation trigger material-containing layer.

In an exemplary embodiment of the present disclosure, the biodegradation trigger material-containing layer may include an enzyme, a catalyst, or a combination thereof and may include any one or more remote trigger heat generation sources selected from the group consisting of infrared absorption dyes, magnetic particles, and electrical devices. When this is satisfied, heating may be induced remotely at a desired time and perform a transition of the biodegradation trigger material-containing layer to a liquid phase to activate an enzyme, a catalyst, or a combination thereof. The activated enzyme and the like may decompose the hydrolysis-resistant biodegradable material.

The biodegradation trigger material-blocking layer may block a direct contact between the biodegradation trigger material-containing layer and the hydrolysis-resistant biodegradable material to prevent the hydrolysis-resistant biodegradable material from being decomposed before activating an enzyme and the like.

In an exemplary embodiment of the present disclosure, the polycarbonate-based polymer including the biodegradation trigger material-containing layer and the biodegradation trigger material-blocking layer may independently of each other have a melting point of 43 to 50°C. In this case, the melting point of the polycarbonate-based polymer including the biodegradable material for blocking moisture may be 55°C or higher, 60°C or higher as a lower limit and 70°C or lower as an upper limit. When this is satisfied, the biodegradation trigger layer performs a transition to a liquid phase by heat generation to prevent the biodegradable material for blocking moisture from being decomposed by activated enzymes and the like.

In addition, the present disclosure provides a biodegradation off-on method including: forming a moisture-blocking layer on all or a part of a surface of the hydrolysis mechanisms biodegradable material, and then forming a hydrolysis-resistant layer on all or a part of a surface of the moisture-blocking layer to turn off the biodegradation of the hydrolysis mechanism biodegradable material; and applying artificial stimulation on any one or more selected from the group consisting of the moisture-blocking layer and the hydrolysis-resistant layer to turn on the biodegradation of the hydrolysis mechanism biodegradable material.

The description of the polycarbonate-based polymer may also be identically applied to the description of the biodegradation off-on method within the overlapping range.

The turning off of biodegradation is turning off biodegradation by forming a moisture-blocking layer on the surface of the hydrolysis mechanism biodegradable material and forming a hydrolysis-resistant layer on the surface of the moisture-blocking layer to prevent the hydrolysis mechanism biodegradable material from being exposed to moisture, thereby turning off degradation.

In an exemplary embodiment of the present disclosure, the turning off of biodegradation may be forming the moisture-blocking layer on all or a part of the surface of the hydrolysis mechanism biodegradable material, forming the biodegradation trigger layer on all or a part of the surface of the moisture-blocking layer, and forming the hydrolysis-resistant layer on all or a part of the surface of the biodegradation trigger layer.

The turning on of biodegradation may be turning on biodegradation by applying artificial stimulation to the moisture-blocking layer and/or the hydrolysis-resistant layer at a desired time and biodegrade the moisture-blocking layer and/or the hydrolysis-resistant layer to allow the hydrolysis mechanism biodegradable material to be exposed to moisture.

In an exemplary embodiment of the present disclosure, the turning on of biodegradation may be applying artificial stimulation to the biodegradation trigger layer.

In an exemplary embodiment of the present disclosure, the artificial stimulation may be any one or more selected from electromagnetic energy, thermal energy, ultrasonic energy, enzymes, and catalysts. When the artificial stimulation is applied to an outer shell for blocking moisture, R¹ contained in the hydrophobic polycarbonate-based polymer may be released to recover a hydroxyl group.

Specifically, the hydrophobic polycarbonate-based polymer included in the hydrolysis-resistant layer may be converted into a polycarbonate-based polymer (poly(5-hydroxy-trimethylene-carbonate), PHTMC) containing a hydroxyl group as shown in the following Equation 1 by external stimulation:

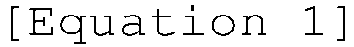

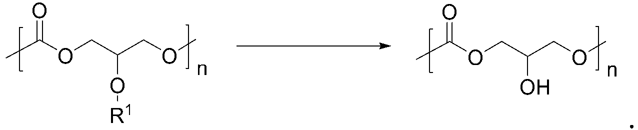

More specifically, Equation 1 may be represented by the following Equation 2:

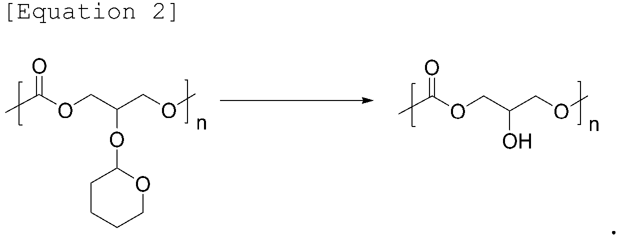

The PHTMC may rapidly biodegrade under moist conditions by an intermolecular cyclization reaction involving oxygen of a hydroxyl group and carbonyl carbon.

### [Best Mode for Carrying out the Invention]

Hereinafter, the exemplary embodiments described above will be described in detail through the following examples. However, the following examples are only for description, and do not limit the scope of a right.

### Example 1

### (1) Monomer preparation

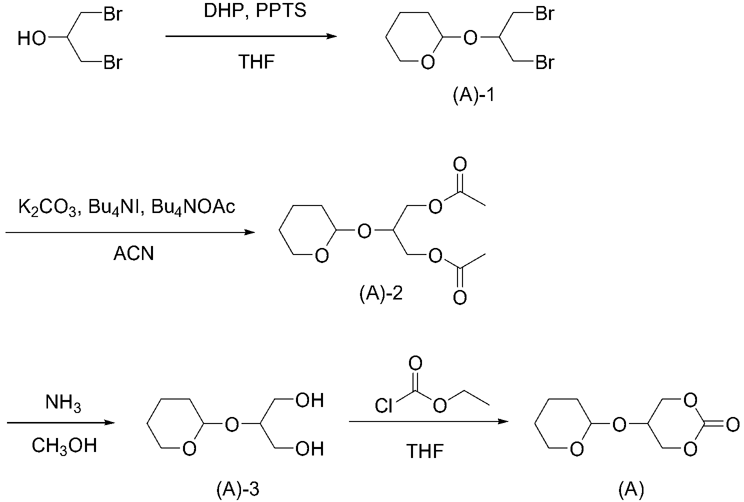

### 1) Step 1

In a round bottom flask, 2 g (1 eq) of 1,3-dibromopropane-2-ol was dissolved in 50 mL of tetrahydrofuran (THF), 0.25 g (0.1 eq) of pyridium p-toluenesulfonate (PPTS) and 1.68 g (2 eq) of 3,4-dihydro-2H-pyran (DHP) were added, and stirring was performed at room temperature for 3 hours. Thereafter, extraction was performed using dichloromethane (DCM) and distilled water, and an organic layer was dried with MgSO₄ and concentrated by filtration. Then, purification was performed with column chromatograph (EA:Hx=1:9) to obtain Compound (A)-1.

### 2) Step 2

4 g (1 eq) of Compound (A)-1 was dissolved in 40 mL of acrylonitrile (acetonitrile, ACN) in a round bottom flask, 11.4 g (3 eq) of tetrabutylammonium acetate (Bu₄NOAc), 0.923 (0.2 eq) of tetrabutylammonium iodide (Bu₄NI), and 0.345 g (0.2 eq) of potassium carbonate (K₂CO₃) were added thereto, and stirring was performed at room temperature overnight. The produced solid content was filtered, extraction was performed using DCM and water, and an organic layer was dried with MgSO₄, filtered, and concentrated. Thereafter, purification was performed with column chromatography (EA:Hx=2:8) to obtain Compound (A)-2.

### 3) Step 3

1.5g (1 eq) of Compound (A)-2 was dissolved in 25 mL of an ammonia solution (2.0 M in methanol) in a round bottom flask, and then stirring was performed at room temperature overnight. Thereafter, purification was performed with column chromatography (ether 100%) without an extraction process to obtain Compound (A)-3.

### 4) Step 4

1 g (1 eq) of Compound (A)-3 and 1.23 g (2 eq) of ethyl chloroformate were dissolved in 15 mL of THF in a 2-neck round bottom flask under a nitrogen condition, and 1.15 g (2 eq) of triethylamine (TEA) was added at 0°C for 0.5 hours. After heating to room temperature, stirring was performed for 2 hours, extraction was performed using DCM and water, and an organic layer was dried with MgSO₄, filtered, and concentrated. Thereafter, purification was performed with column chromatography (ether:DCM=2:1), and recrystallization was performed with ether again to obtain Compound (A) which was a polycarbonate monomer.

### (2) Polycarbonate polymerization

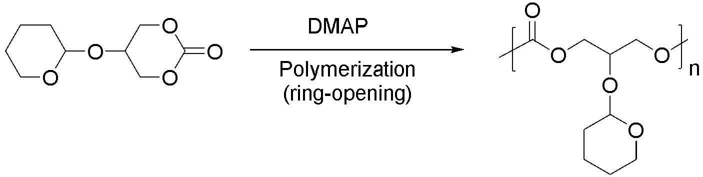

1 g (1 eq) of Compound (A) and 0.024 g (0.04 eq) of dimethylaminopyridine (DMAP) which is an initiator were added to a round bottom flask, and then stirring was performed at 120°C overnight. Thereafter, the produced polymer was dissolved in chloroform and precipitated in 100 mL of methanol, and the precipitated polymer was washed with ether again. A polycarbonate-based polymer having a number average molecular weight of (*M*ₙ) of 19300 g/mol was obtained.

### Example 2

### (1) Monomer preparation

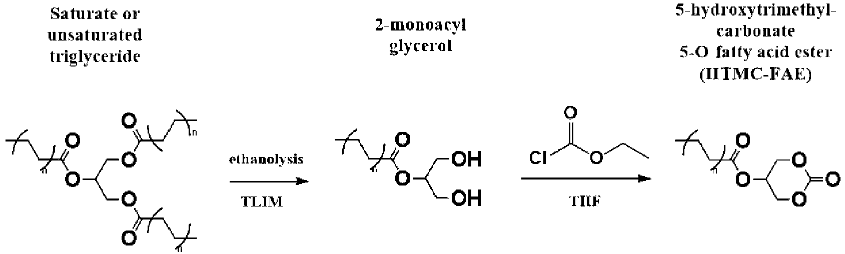

### 1) Step 1

15 g (1 eq) of trilaurin was dissolved in 76 ml of anhydrous ethanol in a round bottom flask, 15 g of Lipozyme TL IM (substrate-enzyme ratio, 0.5 w/w) was added, and stirring was performed at 35°C for 17 hours. Thereafter, filtration was performed twice with glass filter to remove an enzyme, concentration was performed, and purification was performed with flash column chromatography (hexane:acetone) to obtain 2-monoacryl glycerol.

### 2) Step 2

3 g (1 eq) of 2-monoacryl glycerol obtained above and 2.37 g (2 eq) of ethyl chloroformate were dissolved in 404 ml of THF in a 2-neck round bottom flask under a nitrogen condition, and then 2.21 g (2 eq) of triethylamine (TEA) was added at 0°C for 0.5 hours. Heating to room temperature was performed, stirring was performed overnight, extraction was performed using DCM and water, and an organic layer was dried with MgSO₄, filtered, and concentrated. Thereafter, recrystallization was performed with diethyl ether to obtain HTME-FAE which is a polycarbonate monomer.

### (2) Polycarbonate polymerization

1 g (1 eq) of HTMC-laurate was dissolved in 8 ml of anhydrous toluene, each of 38 mg (0.1eq) of anhydrous benzyl alcohol and 83 mg (0.1 eq) of diphenyl Phosphate (DPP) was dissolved in 3 ml, 415 ul of anhydrous toluene. Thereafter, benzyl alcohol and a DPP stock solution were added to a round bottom flask, and then stirring was performed at 25°C at 500 rpm for 30 minutes. Then, a HTMC-laurate stock solution was added, and then stirring was performed at 500 rpm for 48 hours. Thereafter, AmberLyst A21 was added to proceed with a neutralization process and filtration was performed for concentration. Thereafter, purification was performed with an α-alumina pad and dichloromethane (DCM) to obtain PHTMC-laurate. All reactions were performed in a globe box under a nitrogen environment with moisture removed.

### Example 3

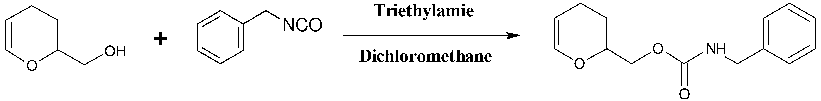

In a round bottom flask, 2 g (1 eq) of 3,4-dihydro-2H-pyran-2-methanol was dissolved in 16 ml of dichloromethane (DCM), 4.66 g (2 eq) of benzyl isocyanate was added, 0.18 g (0.1 eq) of triethylamine (TEA) was added, and stirring was performed at 25°C for 1 hour. Thereafter, a process was performed in the same manner as in Example 1, except that extraction was performed with DCM and distilled water, an organic layer was dried with MgSO₄, and filtration was performed for concentration, thereby obtaining a monomer and a polymer as follows:

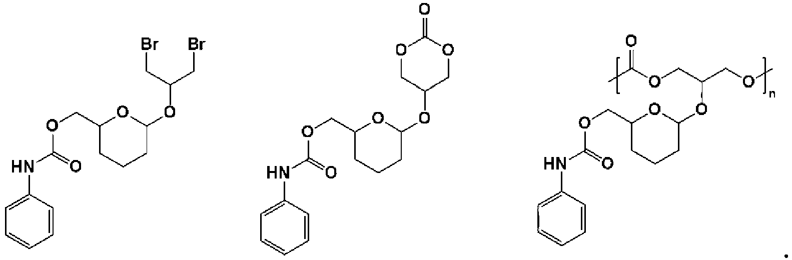

### Experimental Example 4: Biodegradation off-on confirmation

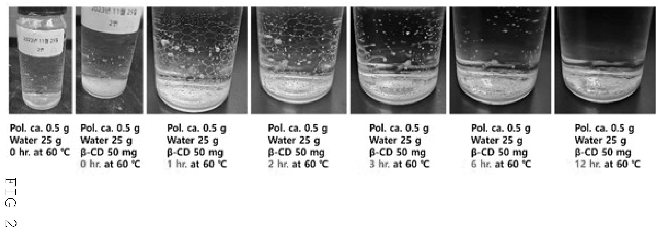

In order to confirm whether the degradation of the polycarbonate-based polymer of the present disclosure was on/off, an experiment was performed, and the results are shown in FIG. 2.

Specifically, the experiment was performed by adding the polycarbonate-based polymer synthesized in Example 1 to a phosphate-buffered physiological saline solution at pH 7.4, observing a change in polymer form after 1 hour, adding betacyclodextrin (β-CD) which is a catalyst having almost no toxicity to the human body to the PBS solution containing the polymer, and observing the change in polymer form over time.

As seen from FIG. 2, since the polymer according to Example 1 of the present disclosure had no change in form even with the exposure to moisture, it was not hydrolyzed (biodegradation off). However, when a catalyst corresponding to artificial stimulation was added, it was confirmed that bubbles were formed over time and complete hydrolysis was performed (biodegradation on). Specifically, by confirming the pattern of decomposition while forming bubbles, a hydroxyl group is formed in the polymer while a tetrahydropyranyl group which is R¹ is released by water and β-CD, carbon dioxide is formed by an intermolecular cyclization reaction, and decomposition into glycerol having no toxicity to the human body was performed.

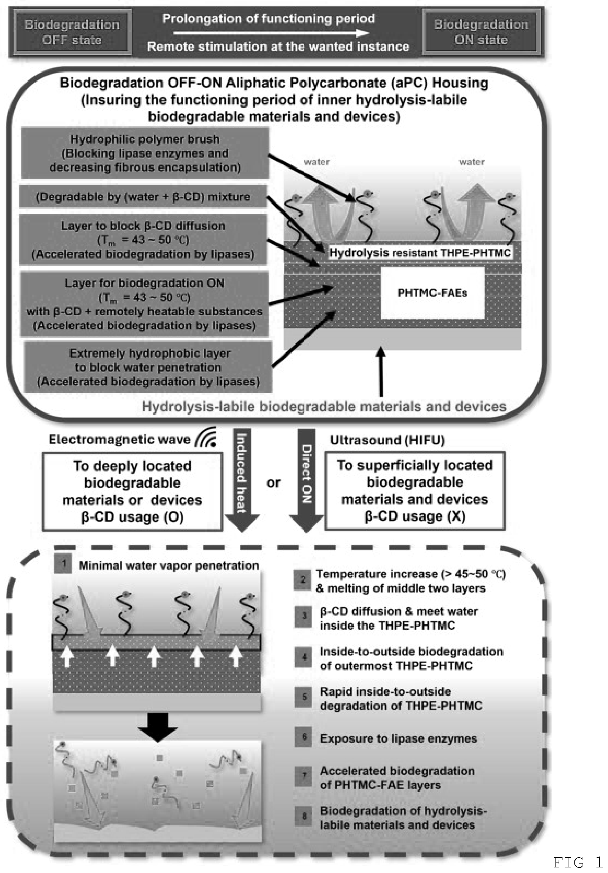

When the results of Examples 1, 2, and 4 were combined, the biodegradation off-on mechanism as shown in FIG. 1 may be suggested.

Hereinabove, though the description was focused on the examples, this is only an example and does not limit the present disclosure. A person skilled in the art to which the present disclosure pertains will understand that various modifications and application which are not illustrated above are allowed within the scope which does not deviate from the essential characteristics of the present examples. For example, each constituent element which are specifically shown in the examples may be modified and carried out. Further, the differences related to the modifications and applications should be interpreted as being included in the scope of the present disclosure which is defined in the attached claims.

## Claims

1. A novel polycarbonate-based polymer comprising: a repeating unit represented by the following Chemical Formula 1,
wherein R¹ is released from the polycarbonate-based polymer by artificial stimulation, and a hydroxyl group is recovered: 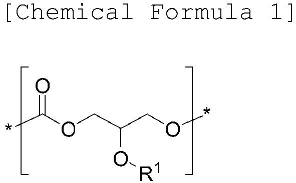
wherein
R¹ is a chain type (C3-C40)alkyl group; a branched (C3-C40)alkyl group; a (C3-C40)cycloalkyl group; a (C3-C40)heterocycloalkyl group; a (C3-C40)alkenyl group; a (C3-C40)alkynyl group; a (C1-C40)heteroalkyl group; a (C6-C40)aryl group; a (C3-C40)heteroaryl group; a (C6-C40)aryl(C1-C40)alkyl group; a (C2-C40)alkyl(C6-C40)aryl group; a silyl group which is -Si(R²)(R³)(R⁴); an acyl group which is -C(=O)R⁵, -C(=O)NHR⁶, -C(=O)NR⁷₂ or -C(=O)OR⁸; or a sulfone group which is -S(=O)₂R⁹,
R² to R⁴ are independently of one another hydrogen, (C1-C40)alkyl group, or (C6-C40)aryl group, but at least one of R² to R⁴ is (C1-C40)alkyl group or (C6-C40)aryl group,
R⁵ to R⁹ are independently of one another a (C1-C40)alkyl group, a (C3-C40)alkenyl group, a (C3-C40)alkynyl group, a (C3-C40)cycloalkyl group, a (C3-C40)heterocycloalkyl group, a (C6-C40)aryl group, a (C3-C40)heteroaryl group, a (C6-C40)aryl(C1-C40)alkyl group, a (C1-C40)alkyl(C6-C40)aryl group, or a substituent derived from a hydrophilic polymer, and
* is a binding site.

2. The novel polycarbonate-based polymer of claim 1, wherein the polycarbonate-based polymer is a hydrophobic polycarbonate-based polymer.

3. The novel polycarbonate-based polymer of claim 2, wherein the polycarbonate-based polymer is a hydrolysis-resistant polycarbonate-based polymer, and R¹ is a chain type (C3-C40)alkyl group; a branched (C3-C40)alkyl group; a (C3-C40)cycloalkyl group; a (C3-C40)heterocycloalkyl group; a (C3-C40)alkenyl group; a (C3-C40)alkynyl group; a (C1-C40)heteroalkyl group; a (C6-C40)aryl group; a (C3-C40)heteroaryl group; a (C6-C40)aryl(C1-C40)alkyl group; or a (C2-C40)alkyl(C6-C40)aryl group.

4. The novel polycarbonate-based polymer of claim 2,
wherein R¹ is a chain type (C3-C20)alkyl group; a branched (C3-C20)alkyl group; a (C3-C20)cycloalkyl group; a (C3-C20)heterocycloalkyl group; a (C1-C20)alkoxy(C1-C20)alkyl group; a (C3-C20)alkenyl group; a silyl group which is -Si(R²)(R³)(R⁴); an acyl group which is -C(=O)R⁵, - C(=O)NHR⁶, -C(=O)NR⁷₂, or -C(=O)OR⁸; or a sulfone group which is -S(=O)₂R⁹,
R² to R⁴ are independently of one another a (C1-C20)alkyl group or a (C6-C20)aryl group, and
R⁵ to R⁹ are independently of one another a (C1-C20)alkyl group, a (C3-C20)alkenyl group, a (C3-C20)alkynyl group, a (C3-C20)cycloalkyl group, a (C3-C20)heterocycloalkyl group, a (C6-C20)aryl group, a (C3-C20)heteroaryl group, a (C6-C20)aryl(C1-C20)alkyl group, or a (C1-C20)alkyl(C6-C20)aryl group.

5. The novel polycarbonate-based polymer of claim 2, wherein R⁵ to R⁹ are independently of one another any one selected from the group consisting of a (C1-C20)alkyl group, a (C3-C20)cycloalkyl group, a (C3-C20)heterocycloalkyl group, a substituent represented by the following Chemical Formula 3, and a substituent represented by the following Chemical Formula 4: 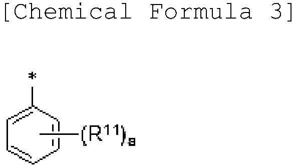 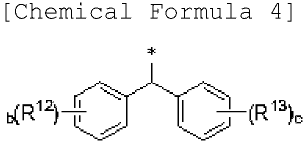
wherein R¹¹ to R¹³ are independently of one another a (C1-C7)alkyl group; and
a to c are independently of one another an integer selected from 0 to 3.

6. The novel polycarbonate-based polymer of claim 3, wherein the polycarbonate-based polymer is grafted with a hydrophilic brush.

7. The novel polycarbonate-based polymer of claim 6, wherein the hydrophilic brush is (C1-200)alkyl(C4-10)heteroalkyl sulfobetaine, (C1-200)alkyl((C4-10)heteroalkyl sulfobetaine)₂, branched (C2-200)alkyl(C4-10)heteroalkyl sulfobetaine, (C1-200)alkyl(C4-10)heteroalkyl carboxybetaine, (C1-200)alkyl((C4-10)heteroalkyl carboxybetaine)₂, branched (C2-200)alkyl(C4-10)heteroalkyl carboxybetaine, (C1-200)alkyl(C4-10)heteroalkyl phosphobetaine, (C1-200)alkyl((C4-10)heteroalkyl carphosphobetaine)₂, branched (C2-200)alkyl(C4-10)heteroalkyl phosphobetaine, or a combination thereof, including zwitterions.

8. The novel polycarbonate-based polymer of claim 2, wherein the hydrophobic polycarbonate-based polymer has a number average molecular weight (Mₙ) of 10,000 to 1,000,000 g/mol.

9. The novel polycarbonate-based polymer of claim 2, wherein the hydrophobic polycarbonate-based polymer has a melting point of 43 to 50°C.

10. The novel polycarbonate-based polymer of claim 1, wherein the polycarbonate-based polymer is a hydrophilic polycarbonate-based polymer, and in Chemical Formula 1,
R¹ is an acyl group which is -C(=O)R⁵, -C(=O)NHR⁶, - C(=O)NR⁷₂, or -C(=O)OR⁸; or a sulfone group which is -S(=O)₂R⁹; and
R⁵ to R⁹ are independently of one another a substituent derived from a hydrophilic polymer.

11. The novel polycarbonate-based polymer of claim 10, wherein the hydrophilic polymer is any one selected from the group consisting of (CH₂CH₂O)₁₋₄₀ethylene glycol; ((CH₂CH₂O)₁₋₄₀)₂diethylene glycol; branched (CH₂CH₂O)₁₋₄₀ethylene glycol; (C1-40)alkyl(C4-10)heteroalkyl sulfobetaine; (C1-40)alkyl((C4-10)heteroalkyl sulfobetaine)₂; branched (C1-40)alkyl(C4-10)heteroalkyl sulfobetaine; (C1-40)alkyl(C4-10)heteroalkyl carboxybetaine; (C1-40)alkyl((C4-10)heteroalkyl carboxybetaine)₂; branched (C1-40)alkyl(C4-10)heteroalkyl carboxybetaine; (C1-40)alkyl(C4-10)heteroalkyl phosphobetaine; (C1-40)alkyl((C4-10)heteroalkyl carphosphobetaine)₂; branched (C1-40)alkyl(C4-10)heteroalkyl phosphobetaine; (CH₂COH)_{1~40}vinyl alcohol; ((CH₂COH)_{1~40})₂divinyl alcohol; branched (CH₂COH)_{1~40}vinyl alcohol; (CH₂COOH)₁₋₄₀acrylic acid; ((CH₂COOH)₁₋₄₀)₂diacrylic acid; branched (CH₂COOH)₁₋₄₀acrylic acid; (CH₂COOM)₁₋₄₀acrylate; ((CH₂COOM)₁₋₄₀)₂diacrylate; branched (CH₂COOM)₁₋₄₀acrylate; (CH₂C(CH₃)(C(=O0H))₁₋₄₀methacrylic acid; ((CH₂C(CH₃)(C(=O0H))₁₋₄₀)₂dimethacrylic acid; branched (CH₂C(CH₃)(C(=O0H))₁₋₄₀methacrylic acid; (CH₂C(CH₃)(C(=O0M))₁₋₄₀methacrylate; ((CH₂C(CH₃)(C(=O0M))₁₋₄₀) ₂dimethacrylate; branched (CH₂C(CH₃)(C(=OOM))₁₋₄₀methacrylate; (CH₂C(CH₃)(C(=O)OH))₁₋₄₀2-propylacrylic acid; ((CH₂C(CH₃)(C(=O)OH))₁₋₄₀)₂di-2-propylacrylic acid; branched (CH₂C(CH₃)(C(=O)OH))₁₋₄₀2-propylacrylic acid; (CH₂C(CH₃)(C(=O)OM))₁₋₄₀2-propylacrylate; (((CH₂C(CH₃)(C(=O)OM))₁₋₄₀)₂di-2-propylacrylate; branched (CH₂C(CH₃)(C(=O)OM))₁₋₄₀2-propylacrylate; (CH₂CH(C(=O)NH₂)₁₋₄₀acrylamide; ((CH₂CH(C(=O)NH₂)₁₋₄₀)₂diacrylamide; branched (CH₂CH(C (=O)NH₂)₁₋₄₀acrylamide; (CH₂CH(C(=O)NH(CH(CH₃)₂)))₁₋₄₀N-isopropylacrylamide; ((CH₂CH(C(=O)NH(CH(CH₃)₂)))₁₋₄₀)₂diN-isopropylacrylamide; branched (CH₂CH(C(=O)NH(CH(CH₃)₂)))₁₋₄₀N-isopropylacrylamide; (CH₂CH(C(=ONHCH₂CH₂OH)))₁₋₄₀hydroxyethyl methacrylamide; ((CH₂CH(C(=ONHCH₂CH₂OH)))₁₋₄₀)₂dihydroxyethyl methacrylamide; branched (CH₂CH(C(=ONHCH₂CH₂OH)))₁₋₄₀hydroxyethyl methacrylamide; (CH₂CH(C(=ONHCH₂CH(OH)CH₃))) ₁₋₄₀2-hydroxypropyl methacrylamide; ((CH₂CH(C(=ONHCH₂CH(OH)CH₃)))₁₋₄₀)di-2-hydroxypropyl methacrylamide; branched (CH₂CH(C (=ONHCH₂CH(OH) CH₃)) ) ₁₋₄₀2-hydroxypropyl methacrylamide; (CH₂C(-OSO₃M)) ₁₋₄₀vinyl sulfate; ((CH₂C(-OSO₃M)) ₁₋₄₀)₂divinyl sulfate; branched (CH₂C(-OSO₃M) ) ₁₋₄₀vinyl sulfate; (CH₂-4-C₆H₆SO₃H)₁₋₄₀4-styrenesulfonic acid; ((CH₂-4-C₆H₆SO₃H)₁₋₄₀)₂di4-styrenesulfonic acid; branched (CH₂-4-C₆H₆SO₃H)₁₋₄₀4-styrenesulfonic acid; (CH₂-4-C₆H₆SO₃NH₄)₁₋₄₀4-ammonium styrenesulfonate; ((CH₂-4-C₆H₆SO₃NH₄)₁₋₄₀)₂di4-ammonium styrenesulfonate; branched (CH₂-4-C₆H₆SO₃NH₄)₁₋₄₀4-ammonium styrenesulfonate; (CH₂C₆H₆SO₃M)₁₋₄₀4-styrenesulfonate; ((CH₂C₆H₆SO₃M)₁₋₄₀)₂di4-styrenesulfonate; branched (CH₂C₆H₆SO₃M)₁₋₄₀4-styrenesulfonate; (CHCH₂NH₂)₁₋₄₀alkylamine; ((CHCH₂NH₂)₁₋₄₀)₂dialkylamine; branched (CHCH₂NH₂)₁₋₄₀alkylamine; (CHCH₂NH₂·HCl)₁₋₄₀alkylaminehydrochloride; ((CHCH₂NH₂ ·HCl)₁₋₄₀)₂dialkylaminehydrochloride; branched (CHCH₂NH₂ ·HCl)₁₋₄₀alkylaminehydrochloride; (CH₂N(CH₂CH₂N)₁₋₂ or (CH₂CH₂N(CH₂CH₂NH₂)₂)CH₂CH₂NHCH₂)₁₋₄₀ethyleneimine; ((CH₂N(CH₂CH₂N)₁₋₂ or (CH₂CH₂N(CH₂CH₂NH₂)₂) CH₂CH₂NHCH₂)₁₋₄₀)₂diethyleneimine; (CH₂N(CH₂CH₂N·HCl)₁₋₂ or (CH₂CH₂N(CH₂CH₂NH₂ ·HCl)₂)CH₂CH₂NHCH₂)₁₋₄₀ethyleneiminehydrochloride; ((CH₂N(CH₂CH₂N·HCl)₁₋₂ or (CH₂CH₂N(CH₂CH₂NH₂ ·HCl)₂)CH₂CH₂NHCH₂)₁₋₄₀)₂diethyleneiminehydrochloride; (CH₂SO₃M)₁₋₄₀vinyl sulfonate; ((CH₂SO₃M)₁₋₄₀)₂divinyl sulfonate; branched (CH₂SO₃M)₁₋₄₀vinyl sulfonate; (CH₂CHC(=O)NH₂))₁₋₄₀acrylamide; ((CH₂CHC(=O)NH₂))₁₋₄₀)₂diacrylamide; branched (CH₂CHC(=O)NH₂))₁₋₄₀acrylamide (CH₂CH(C (=O) NHCH (CH₃)₂)) ₁₋₄₀N-isopropylacrylamide; ((CH₂CH(C (=O) NHCH (CH₃)₂)) ₁₋₄₀)₂di-N-isopropylacrylamide; branched (CH₂CH(C (=O) NHCH(CH₃)₂)) ₁₋₄₀N-isopropylacrylamide; (CH₂(cyclic CHCH₂N⁺(CH₃)₂CH₂CH ·Cl⁻)CH₂)₁₋₄₀tetramethyl pyrrolidium chloride; ((CH₂(cyclic CHCH₂N⁺(CH₃)₂CH₂CH·Cl⁻)CH₂)₁₋₄₀)₂ditetramethyl pyrrolidium chloride; branched (CH₂(cyclic CHCH₂N⁺(CH₃)₂CH₂CH·Cl⁻) CH₂)₁₋₄₀tetramethyl pyrrolidium chloride; SiH₂(CH₂CH₂O)₁₋₄₀silylethylene glycol; branched SiH₂((CH₂CH₂O)₁₋₄₀)silylethylene glycol; SiH((CH₂CH₂O)₁₋₄₀)₂silyl di(ethylene glycol); Si((CH₂CH₂O)₁₋₄₀)₃silyl tri(ethylene glycol); SiH₂(CH₂COH)_{1~40}silylvinyl alcohol; branched SiH₂O(CH₂COH)_{1~40}silylvinyl alcohol; SiH((CH₂COH)_{1~40})₂silyl di(vinyl alcohol); Si((CH2_{C}OH)1_{~40)}3ₛilyl tri(vinyl alcohol); SiH₂(CH₂COOH)₁₋₄₀silylacrylic acid; branched SiH₂(CH₂COOH)₁₋₄₀silylacrylic acid; SiH((CH₂COOH)₁₋₄₀)₂silyl di(acrylic acid); Si((CH₂COOH)₁₋₄₀)₂silyl tri(acrylic acid); SiH₂(CH₂COOM)₁₋₄₀silylacrylate; branched SiH₂(CH₂COOM)₁₋₄₀silylacrylate; SiH((CH₂COOM)₁₋₄₀)₂silyl di(acrylate); Si((CH₂COOM)₁₋₄₀)₃silyl tri(acrylate); SiH₂(CH₂C(CH₃)(C(=O0H))₁₋₄₀silyl methacrylic acid; branched SiH₂(CH₂C(CH₃)(C(=O0H))₁₋₄₀silyl methacrylic acid; SiH((CH₂C(CH₃)(C(=O0H))₁₋₄₀)₂silyl di(methacrylic acid); Si((CH₂C(CH₃)(C(=O0H))₁₋₄₀)₃silyl tri(methacrylic acid); SiH₂(CH₂C(CH₃)(C(=O0M))₁₋₄₀silyl methacrylate; branched SiH₂(CH₂C(CH₃)(C(=O0M))₁₋₄₀silyl methacrylate; SiH((CH₂C(CH₃)(C(=O0M))₁₋₄₀)₂silyl di(methacrylate); Si((CH₂C(CH₃)(C(=O0M))₁₋₄₀)₃silyl tri(methacrylate); SiH₂(CH₂C(CH₃)(C(=O)OH))₁₋₄₀silyl-2-propylacrylic acid; branched SiH₂(CH₂C(CH₃)(C(=O)OH))₁₋₄₀silyl-2-propylacrylic acid; SiH((CH₂C(CH₃)(C(=O)OH))₁₋₄₀)₂silyl di(2-propylacrylic acid); Si((CH₂C(CH₃)(C(=O)OH))₁₋₄₀)₃silyl tri(2-propylacrylic acid); SiH₂(CH₂C(CH₃)(C(=O)OM))₁₋₄₀silyl-2-propylacrylate; branched SiH₂(CH₂C(CH₃)(C(=O)OM))₁₋₄₀silyl-2-propylacrylate; SiH(((CH₂C(CH₃)(C(=O)OM))₁₋₄₀₎)₂silyl di(2-propylacrylate); Si(((CH₂C(CH₃)(C(=O)OM))₁₋₄₀₎)₂silyl tri(2-propylacrylate); SiH₂(CH₂CH(C(=O)NH₂)₁₋₄₀silylacrylamide; branched SiH₂(CH₂CH(C(=O)NH₂)₁₋₄₀silylacrylamide; SiH((CH₂CH(C(=O)NH₂)₁₋₄₀)₂silyl di(acrylamide); Si((CH₂CH(C(=O)NH₂)₁₋₄₀)₃silyl tri(acrylamide); SiH₂(CH₂CH(C(=O)NH(CH(CH₃)₂)))₁₋₄₀silylN-isopropylacrylamide; branched SiH₂O(CH₂CH(C(=O)NH(CH(CH₃)₂)))₁₋₄₀silylN-isopropylacrylamide; SiH((CH₂CH(C(=O)NH(CH(CH₃)₂)))₁₋₄₀)₂silyl di(N-isopropylacrylamide); Si((CH₂CH(C(=O)NH(CH(CH₃)₂)))₁₋₄₀)₃silyl tri(N-isopropylacrylamide); SiH₂(CH₂CH(C(=ONHCH₂CH₂OH)))₁₋₄₀silylhydroxyethyl methacrylamide; branched SiH₂(CH₂CH(C(=ONHCH₂CH₂OH)))₁₋₄₀silylhydroxyethyl methacrylamide; SiH((CH₂CH(C(=ONHCH₂CH₂OH)))₁₋₄₀)₂silyl di(hydroxyethyl methacrylamide); SiH((CH₂CH(C(=ONHCH₂CH₂OH)))₁₋₄₀)₃silyl tri(hydroxyethyl methacrylamide); SiH₂(CH₂CH(C(=ONHCH₂CH(OH)CH₃)))₁₋₄₀silyl-2-hydroxypropyl methacrylamide; branched SiH₂(CH₂CH(C(=ONHCH₂CH(OH)CH₃)))₁₋₄₀silyl-2-hydroxypropyl methacrylamide; SiH((CH₂CH(C(=ONHCH₂CH(OH)CH₃)))₁₋₄₀)₂silyl di(2-hydroxypropyl methacrylamide); Si((CH₂CH(C(=ONHCH₂CH(OH)CH₃)))₁₋₄₀)₃silyl tri(2-hydroxypropyl methacrylamide); SiH₂(CH₂C(-OSO₃M))₁₋₄₀silylvinyl sulfate; branched SiH₂(CH₂C(-OSO₃M))₁₋₄₀silylvinyl sulfate; SiH((CH₂C(-OSO₃M))₁₋₄₀)₂silyl di(vinyl sulfate); SiH((CH₂C(-OSO₃M))₁₋₄₀)₃silyl tri(vinyl sulfate); SiH₂(CH₂-4-C₆H₆SO₃H)₁₋₄₀silyl4-styrenesulfonic acid; branched SiH₂(CH₂-4-C₆H₆SO₃H)₁₋₄₀silyl4-styrenesulfonic acid; SiH((CH₂-4-C₆H₆SO₃H)₁₋₄₀)₂silyl di(4-styrenesulfonic acid); SiH((CH₂-4-C₆H₆SO₃H)₁₋₄₀)₃silyl tri(4-styrenesulfonic acid); SiH2₍CH2₋4-C₆H₆SO₃NH₄)₁₋₄₀silyl4-ammonium styrenesulfonate; branched SiH₂(CH₂-4-C₆H₆SO₃NH₄)₁₋₄₀silyl4-ammonium styrenesulfonate; SiH((CH₂-4-C₆H₆SO₃NH₄)₁₋₄₀)₂silyl di(4-ammonium styrenesulfonate); SiH((CH₂-4-C₆H₆SO₃NH₄)₁₋₄₀)₃silyl tri(4-ammonium styrenesulfonate); SiH₂(CH₂C₆H₆SO₃M)₁₋₄₀silyl4-styrenesulfonate; branched SiH₂(CH₂C₆H₆SO₃M)₁₋₄₀silyl4-styrenesulfonate; SiH((CH₂C₆H₆SO₃M)₁₋₄₀)₂silyl di(4-styrenesulfonate); SiH((CH₂C₆H₆SO₃M)₁₋₄₀)₃silyl tri(4-styrenesulfonate); SiH2₍CHCH2_{N}H2₎1₋₄₀ₛilylalkylamine; branched SiH₂(CHCH₂NH₂)₁₋₄₀silylalkylamine; SiH((CHCH₂NH₂)₁₋₄₀)₂silyl di(alkylamine); SiH((CHCH₂NH₂)₁₋₄₀)₃silyl tri(alkylamine); SiH2₍CHCH2_{N}H2_{·}HCl)1₋₄₀silylalkylaminehydrochloride; branched SiH₂(CHCH₂NH₂·HCl)₁₋₄₀silylalkylaminehydrochloride; SiH((CHCH₂NH₂·HCl)₁₋₄₀)₂silyl di(alkylaminehydrochloride); SiH((CHCH₂NH₂·HCl)₁₋₄₀)₃silyl tri(alkylaminehydrochloride); SiH₂(CH₂N(CH₂CH₂N)₁₋₂ or (CH₂CH₂N(CH₂CH₂NH₂)₂)CH₂CH₂NHCH₂)₁₋₄₀silylethyleneimine; SiH((CH₂N(CH₂CH₂N)₁₋₂ or SiH₂O(CH₂CH₂N(CH₂CH₂NH₂)₂)CH₂CH₂NHCH₂)₁₋₄₀)₂silyl di(ethyleneimine) ; Si ((CH₂N(CH₂CH₂N)₁₋₂ or SiH₂O (CH₂CH₂N(CH₂CH₂NH₂)₂) CH₂CH₂NHCH₂)₁₋₄₀)₃silyl tri (ethyleneimine) ; SiH₂ (CH₂N(CH₂CH₂N·HCl)₁₋₂ or (CH₂CH₂N(CH₂CH₂NH₂ ·HCl)₂) CH₂CH₂NHCH₂)₁₋₄₀silylethyleneimine ·hydrochloride; SiH ((CH₂N(CH₂CH₂N·HCl)₁₋₂ or (CH₂CH₂N(CH₂CH₂NH₂ ·HCl)₂) CH₂CH₂NHCH₂)₁₋₄₀)₂silyl di (ethyleneimine ·hydrochloride) ; Si ((CH₂N(CH₂CH₂N·HCl)₁₋₂ or (CH₂CH₂N(CH₂CH₂NH₂ ·HCl)₂) CH₂CH₂NHCH₂)₁₋₄₀)₃silyl tri (ethyleneimine ·hydrochloride) ; SiH₂ (CH₂SO₃M)₁₋₄₀silylvinyl sulfonate; branched SiH₂ (CH₂SO₃M)₁₋₄₀silyl divinyl sulfonate; SiH ((CH₂SO₃M)₁₋₄₀)₂silyl di(vinyl sulfonate); Si ((CH₂SO₃M)₁₋₄₀)₃silyl tri (vinyl sulfonate) ; SiH₂ (CH₂CHC (=O) NH₂)) ₁₋₄₀silylacrylamide; branched SiH₂(CH₂CHC (=O) NH₂)) ₁₋₄₀silyl diacrylamide; SiH ((CH₂CHC (=O) NH₂))₁₋₄₀)₂silyl di (acrylamide) ; Si ((CH₂CHC (=O) NH₂))₁₋₄₀)₃silyl tri (acrylamide) ; SiH₂ (CH₂CH(C (=O) NHCH (CH₃)₂)) ₁₋₄₀SilylN-isopropylacrylamide; branched SiH₂(CH₂CH(C(=O)NHCH(CH₃)₂))₁₋₄₀silylN-isopropylacrylamide; SiH ((CH₂CH(C (=O) NHCH (CH₃)₂)) ₁₋₄₀)₂silyl di(N-isopropylacrylamide) ; Si((CH₂CH(C(=O)NHCH(CH₃)₂))₁₋₄₀)₃silyl tri (N-isopropylacrylamide) ; SiH₂ (CH₂ (cyclic CHCH₂N⁺(CH₃)₂CH₂CH·Cl⁻)CH₂)₁₋₄₀silyl tetramethyl pyrrolidium chloride; branched SiH₂ (CH₂ (cyclic CHCH₂N⁺(CH₃)₂CH₂CH·Cl⁻) CH₂)₁₋₄₀silyl tetramethyl pyrrolidium chloride; SiH((CH₂(cyclic SiH₂OCHCH₂N⁺(CH₃)₂CH₂CH·Cl⁻)CH₂)₁₋₄₀)₂silyl di(tetramethyl pyrrolidium chloride); and Si((CH₂(cyclic SiH₂OCHCH₂N⁺(CH₃)₂CH₂CH·Cl⁻)CH₂)₁₋₄₀)₃silyl tri(tetramethyl pyrrolidium chloride).

12. A biodegradable composition comprising: the polycarbonate-based polymer according to any one of claim 2 to 9.

13. The biodegradable composition of claim 12, further comprising: any one or more selected from the group consisting of remote trigger heat generation sources, enzymes, and catalysts.

14. The biodegradable composition of claim 13, wherein the remote trigger heat generation source includes any one or more selected from the group consisting of infrared absorption dyes, magnetic particles, and electrical devices.

15. A biodegradable material for blocking moisture prepared from the biodegradable composition according to claim 12.

16. A hydrolysis-resistant biodegradable material prepared from the biodegradable composition according to claim 12.

17. A biodegradation off-on material comprising: the biodegradable material for blocking moisture according to claim 15; and the hydrolysis-resistant biodegradable material according to claim 16.

18. The biodegradation off-on material of claim 17, further comprising: one or two or more biodegradation trigger layers.

19. A biodegradation off-on method comprising:
forming a moisture-blocking layer on all or a part of a surface of the hydrolysis mechanisms biodegradable material, and then forming a hydrolysis-resistant layer on all or a part of a surface of the moisture-blocking layer to turn off the biodegradation of the hydrolysis mechanism biodegradable material; and
applying artificial stimulation on any one or more selected from the group consisting of the moisture-blocking layer and the hydrolysis-resistant layer to turn on the biodegradation of the hydrolysis mechanism biodegradable material.

20. The biodegradation off-on method of claim 19, wherein the artificial stimulation is any one or more selected from the group consisting of electromagnetic energy, thermal energy, ultrasonic energy, enzymes, and catalysts.

21. The biodegradation off-on method of claim 19, wherein the turning off of the biodegradation is forming the moisture-blocking layer on all or a part of the surface of the hydrolysis mechanism biodegradable material, forming a biodegradation trigger layer on all or a part of the surface of the moisture-blocking layer, and forming the hydrolysis-resistant layer on all or a part of the surface of the biodegradation trigger layer.

22. The biodegradation off-on method of claim 21, wherein the turning on of the biodegradation is applying the artificial stimulation to the biodegradation trigger layer.
